# FASCICULE DE BREVET EUROPEEN

(11) **EP 3 238 422 B1**
(45) Date de publication et mention de la délivrance du brevet: **26.01.2022**
(21) Numéro de dépôt: 15823674.5
(22) Date de dépôt: 18.12.2015
(51) Int. Cl.: H04L 29/12, H04L 29/06

(54) **PROCÉDÉ ET DISPOSITIF DE MAINTIEN D'ASSOCIATIONS D'ADRESSES DE TRANSPORT AUPRÈS D'UNE ENTITÉ DE TRADUCTION D'ADRESSES**
VERFAHREN UND VORRICHTUNG ZUR AUFRECHTERHALTUNG VON TRANSPORTADRESSENASSOZIATIONEN FÜR EINE ADRESSÜBERSETZUNGSEINHEIT
METHOD AND DEVICE FOR MAINTAINING TRANSPORT ADDRESS ASSOCIATIONS FOR AN ADDRESS TRANSLATION ENTITY

(30) Priorité: 23.12.2014 FR 1463211
(43) Date de publication de la demande: 01.11.2017
(73) Titulaire: ORANGE, 92130 Issy-les-Moulineaux (FR)
(72) Inventeur: LE ROUZIC, Jean-Claude, 22560 Trebeurden (FR); DOREE, José, 22300 Lannion (FR)
(74) Mandataire: Cabinet Beau de Loménie
(86) Numéro de dépôt international: PCT/FR2015/053624
(87) Numéro de publication internationale: WO 2016/102841

(56) Documents cités:
- US-A1- 2007 140 159
- US-A1- 2009 103 540
- US-A1- 2009 157 887
- JENNINGS C ET AL: "Managing Client Initiated Connections in the Session Initiation Protocol (SIP); draft-ietf-sip-outbound-06.txt", 20061122, vol. sip, no. 6, 22 novembre 2006 (2006-11-22), XP015048135, ISSN: 0000-0004
- GURBANI LUCENT TECHNOLOGIES V ET AL: "Handling Large User Datagram Protocol (UDP) Responses in the Session Initiation Protocol (SIP); draft-gurbani-sip-large-udp-response-00.tx t", 20061003, 3 octobre 2006 (2006-10-03), XP015046567, ISSN: 0000-0004

## Description

### Arrière-plan de l'invention

L'invention se rapporte au domaine général des télécommunications.

Elle concerne plus particulièrement un mécanisme de configuration d'une entité de traduction d'adresses (ou NAT pour Network Address Translation) placée en coupure de flux entre deux dispositifs (ex. un terminal et un serveur) dans un réseau de télécommunications.

De façon connue, une entité NAT, respectivement NAPT (pour Network Address and Port Translation), est une entité qui associe à une adresse réseau, respectivement à une adresse de transport, dite privée (ou interne) de l'un des dispositifs, une adresse réseau, respectivement une adresse de transport, dite publique (ou externe), et qui procède à la traduction de l'adresse privée en l'adresse publique et inversement sur détection d'un message contenant cette adresse privée, respectivement publique. Par adresse de transport d'un dispositif, on entend ici la combinaison d'une adresse IP (Internet Protocol) et d'un port qui identifient le dispositif au niveau transport. Chaque association d'une adresse privée avec une adresse publique est réalisée pour un mode de transport donné, c'est-à-dire un protocole de transport. Un tel protocole est par exemple le protocole TCP (Transmission Control Protocol), UDP (User Datagram Protocol) ou SCTP (Stream Control Transmission Protocol).

Une telle entité NAT ou NAPT est couramment utilisée pour protéger les réseaux de télécommunications, et notamment les réseaux de télécommunications mettant en œuvre le protocole SIP (Session Initiation Protocol), normalisé et standardisé par l'IETF (Internet Engineering Task Force), et décrit dans le document RFC 3261 édité par l'IETF et intitulé « SIP Session Initiation Protocol », Juin 2002. Un tel réseau est par exemple un réseau de voix sur LTE (Long Term Evolution) ou VoLTE (pour Voice over LTE), un réseau de vidéo sur LTE ou ViLTE (pour Vidéo over LTE), etc., qui s'appuie sur une architecture IMS (IP Multimedia Subsystem) telle que définie par le standard 3GPP (Third Generation Partnership Project). Dans ces réseaux, une entité NAPT peut être utilisée en coupure de flux entre les terminaux et le point d'entrée dans le cœur de réseau IMS de l'opérateur, aussi appelé serveur P-CSCF (pour Proxy Call Session Control Function), et auprès duquel les terminaux s'enregistrent pour pouvoir accéder aux services offerts par le cœur de réseau. Elle permet d'accepter ou au contraire de refuser certains flux selon des règles qui lui sont propres, par exemple en fonction de l'adresse de transport source utilisée pour transporter ces flux. Il est d'usage de considérer que les flux venant des terminaux sont autorisés et déclenchent l'ouverture d'une porte (ou « pinhole ») sur l'entité NAT, une porte étant identifiée par l'association de plusieurs informations à savoir une adresse de transport privée (incluant une adresse IP et un port), une adresse de transport publique et un mode (protocole) de transport. Autrement dit, des portes sont créées sur l'entité NAT en réponse à des messages émis dans le sens terminal (ou réseau d'accès) vers cœur de réseau seulement, aucune porte ne pouvant être créée dans le sens cœur de réseau vers terminal.

Les terminaux mobiles hébergent aujourd'hui de plus en plus d'applications communiquant au travers d'un ou de plusieurs réseaux d'opérateurs, parmi lesquelles notamment les applications de communication enrichie RCS (pour Rich Communication Services) ou dérivant de la technologie RCS comme les applications de SMS/MMS personnalisés, la voix sur LTE, etc.

Pour fonctionner, ces applications ont besoin de s'enregistrer auprès du cœur de réseau de l'opérateur. A cet effet, une requête d'enregistrement SIP REGISTER est émise par le terminal vers le serveur P-CSCF. La taille de cette requête d'enregistrement dépend du nombre d'applications requérant une connectivité au réseau : à chaque application correspond(ent) en effet une ou plusieurs caractéristiques multimédia (ou « feature tags » en anglais) venant enrichir le contenu d'un champ Contact de la requête SIP REGISTER émise par le terminal. Par conséquent, plus nombreuses sont les applications voulant s'enregistrer auprès du cœur de réseau, plus long est le champ Contact de la requête, et donc la requête SIP REGISTER elle-même.

La norme SIP impose aux dispositifs mettant en œuvre ce protocole (c'est-à-dire notamment aux terminaux et aux entités du cœur de réseau telles que le serveur P-CSCF) de supporter les deux protocoles de transport UDP et TCP. La plupart des terminaux aujourd'hui utilisent toutefois par défaut le protocole de transport UDP, pour des raisons de faible complexité notamment. La norme SIP prévoit cependant que lorsqu'une requête SIP dépasse une certaine taille, les dispositifs mettant en œuvre le protocole SIP doivent utiliser pour transporter cette requête le protocole de transport TCP, afin notamment de limiter les risques liés à une fragmentation des paquets UDP. Autrement dit, un dispositif configuré par défaut pour utiliser un mode de transport (i.e. un protocole) UDP doit basculer sur un mode de transport TCP s'il souhaite transmettre une requête SIP ayant une taille supérieure à un seuil déterminé. Ce seuil est défini dans le document RFC 3261 (chapitre 18.1.1) édité par l'IETF à 1300 octets.

Ce mode de fonctionnement imposé par la norme SIP peut être à l'origine de divers problèmes en présence d'une entité NAT entre un terminal et un serveur P-CSCF.

Plus précisément, on suppose par exemple qu'un terminal s'enregistre auprès du cœur de réseau en utilisant le mode de transport UDP : à cet effet, il envoie au serveur P-CSCF une requête SIP REGISTER ayant pour adresse de transport source une adresse de transport privée @IPpriv_UDP et véhiculée (transportée) conformément au protocole UDP. Cette requête est interceptée par l'entité NAT qui associe à l'adresse @IPpriv_UDP une adresse de transport publique @IPpub_UDP, et ouvre ainsi une porte pour ce terminal pour le protocole UDP. L'entité NAT transfère ensuite la requête SIP REGISTER du terminal au serveur P-CSCF avec cette adresse de transport @IPpub_UDP comme adresse source.

On suppose maintenant qu'une requête provenant du serveur P-CSCF et destinée au terminal dépasse la taille maximale autorisée pour utiliser le protocole UDP. Conformément à la norme SIP, le serveur P-CSCF doit envoyer cette requête au terminal selon le protocole de transport TCP. Or, aucune entité (et en particulier ni le serveur P-CSCF ni l'entité NAT) ne dispose d'une association d'adresses de transport publique/privée pour ce mode de transport TCP pour le terminal (i.e. aucune porte ouverte) puisque le terminal s'est enregistré avec le protocole de transport UDP. Par conséquent la requête du serveur P-CSCF ne peut être transmise dans ce contexte au terminal.

Un autre problème peut se poser également dans le sens des communications montantes (i.e. du terminal vers le réseau).

On suppose par exemple que le nombre d'applications hébergées par un terminal souhaitant s'enregistrer impose au terminal de basculer sur un mode de transport TCP bien que celui-ci soit configuré par défaut pour utiliser le mode de transport UDP. Dans ce contexte, la requête SIP REGISTER émise par le terminal à destination du serveur P-CSCF peut indiquer dans le champ Contact de l'entête une adresse de contact (ou AoC pour Address of Contact) joignable en mode UDP alors même que la requête SIP REGISTER est transportée selon le protocole TCP.

Au niveau de l'entité NAT, sur réception d'une telle requête SIP REGISTER, une porte est ouverte pour le mode de transport TCP, mais aucune porte n'est ouverte pour le mode de transport UDP bien que le terminal souhaite recevoir les requêtes du réseau sur une adresse joignable en mode UDP.

Par conséquent, si l'entité NAT reçoit une requête destinée au terminal, provenant du serveur P-CSCF et émise en utilisant le mode UDP, l'entité NAT est alors incapable de traiter cette requête. En effet, aucune porte UDP n'est ouverte sur l'entité NAT pour laisser passer cette requête, et comme mentionné précédemment, une requête provenant du cœur de réseau n'est pas apte à déclencher une telle ouverture. Il en résulte que le serveur P-CSCF ne recevra aucune réponse du terminal à sa requête.

Le document US2009/103540 décrit un procédé de traversée d'une entité de traduction d'adresses pour des messages de signalisation SIP. Le document US2007/140159A1 décrit un procédé, appareil et produit de logiciel pour ordinateur pour maintenir des rapports de correspondance.

Le document édité par l'IETF intitulé « Managing Client Initiated Connections in the Session Initiation Protocol », 22 novembre 2006, définit les comportements des agents utilisateurs, des « registrars » et des serveurs proxys pour permettre à des requêtes d'être délivrées sur des connexions existantes établies par l'agent utilisateur.

### Objet et résumé de l'invention

L'invention vise notamment à pallier à ces inconvénients en proposant un procédé de maintien d'associations d'adresses de transport auprès d'une entité de traduction d'adresses de transport placée en coupure de flux entre un premier dispositif et un second dispositif, le procédé de maintien étant destiné à être mis en œuvre par le premier dispositif et comprenant :
- une étape d'envoi, conformément à un premier protocole de transport, d'un premier message ayant une première adresse de transport dite privée à destination du second dispositif, ce premier message étant apte à déclencher une première association par l'entité de traduction d'adresses de transport d'une première adresse dite publique à la première adresse privée et au premier protocole de transport ;
- sur réception d'une réponse au premier message provenant du second dispositif, une étape d'envoi, conformément à un second protocole de transport, d'un second message ayant une seconde adresse de transport privée à destination du second dispositif, ce second message étant apte à déclencher une seconde association par l'entité de traduction d'adresses de transport de ladite seconde adresse privée à une seconde adresse dite publique et au second protocole de transport, le second message contenant en outre une information dite de correspondance, comprise également dans le premier message et/ou dans la réponse au premier message, et apte à déclencher, suite à la réception du second message par le second dispositif, la mise en correspondance par le second dispositif de la seconde adresse de transport publique avec la première adresse de transport publique.

Corrélativement, l'invention vise aussi un dispositif, dit premier dispositif, comprenant :
- un premier module d'envoi configuré pour envoyer conformément à un premier protocole de transport, un premier message ayant une première adresse de transport dite privée à destination d'un second dispositif, ce premier message étant apte à déclencher une première association, par une entité de traduction d'adresses de transport placée en coupure de flux entre ledit premier dispositif et ledit second dispositif, d'une première adresse dite publique à la première adresse privée et au premier protocole de transport ;
- un second module d'envoi, activé sur réception d'une réponse au premier message provenant du second dispositif, et configuré pour envoyer conformément à un second protocole de transport, un second message ayant une seconde adresse de transport privée à destination du second dispositif, ce second message étant apte à déclencher une seconde association par l'entité de traduction d'adresses de transport de ladite seconde adresse privée à une seconde adresse dite publique et au second protocole de transport, le second message contenant en outre une information dite de correspondance, comprise également dans le premier message et/ou dans la réponse au premier message, et apte à déclencher, suite à la réception du second message par le second dispositif, la mise en correspondance par le second dispositif de la seconde adresse de transport publique avec la première adresse de transport publique.

Dans l'exemple envisagé précédemment, le premier dispositif est typiquement un terminal, le second dispositif un serveur P-CSCF d'un cœur de réseau IP, et les premier et second protocoles sont choisis parmi les protocoles UDP et TCP. Toutefois, l'invention ne se limite pas exclusivement à des architectures IMS ni aux seuls protocoles de transport UDP et TCP. Elle peut également s'appliquer à toute autre architecture implémentant le protocole SIP ou un protocole au niveau applicatif ayant un comportement identique ou similaire, et qui impose à des équipements communiquant sur le réseau et séparés par une entité NAT de basculer d'un mode de transport à un autre, ces modes de transport pouvant être UDP, TCP, SCTP, etc.

L'invention permet ainsi au premier dispositif, par le biais des deux messages envoyés au second dispositif selon le premier mode de transport et selon le seconde mode de transport, de créer dynamiquement et de maintenir simultanément auprès de l'entité NAT deux portes ouvertes, autrement dit, deux associations d'adresses de transport pour le premier protocole de transport et pour le second protocole de transport respectivement. De cette sorte, on s'assure que l'entité NAT est capable de traiter des requêtes adressées au premier dispositif selon les deux modes de transport.

En outre les adresses de transport publiques utilisées selon les deux protocoles de transport sont avantageusement mises en correspondance au niveau du second dispositif. De cette sorte, le second dispositif est capable de traiter et de router correctement vers le premier dispositif une requête lui étant destinée et arrivant au second dispositif.

Ceci est rendu possible conformément à l'invention par l'envoi du second message par le premier dispositif au second dispositif. Ce second message a pour fonction d'une part, de créer auprès de l'entité NAT une association (ou « binding » en anglais) d'adresses pour le second mode de transport, et d'autre part, d'informer le second dispositif de cette association d'adresses et de véhiculer une information dite de correspondance qui permet à ce second dispositif de mettre en correspondance l'association d'adresses, et plus particulièrement l'adresse publique, créée pour le premier mode de transport avec l'association d'adresses, et plus particulièrement l'adresse publique, créée pour le second mode de transport. De cette sorte, le second dispositif est capable de gérer et d'orienter correctement les requêtes qui lui parviennent et qui sont destinées au premier dispositif.

Les problèmes mentionnés précédemment sont donc résolus par l'invention, que celle-ci soit appliquée dans un contexte où il existe ou non une différence entre le protocole utilisé par le premier dispositif pour s'enregistrer auprès du second dispositif et le protocole utilisé pour véhiculer sa requête d'enregistrement. Le terminal peut conformément à l'invention être joint sur l'un ou l'autre des protocoles.

Dans un mode particulier de réalisation, le procédé comprend en outre une étape d'envoi d'un message de rafraîchissement de la première association d'adresses et/ou d'un message de rafraîchissement de la seconde association d'adresses auprès de l'entité de traduction d'adresses.

Ces messages (ou requêtes) de rafraîchissement ont pour but de conserver (maintenir) ouvertes les portes créées sur l'entité NAT afin que le premier dispositif puisse recevoir des requêtes en provenance du second dispositif selon l'un ou l'autre des protocoles.

La réponse au premier message peut d'ailleurs avantageusement comprendre une période de rafraîchissement de la première et /ou de la seconde association d'adresses.

Comme mentionné précédemment, l'invention s'appuie sur l'activation de deux associations d'adresses selon deux protocoles de transport différents auprès de l'entité NAT par le premier dispositif mais également sur la mise en correspondance par le second dispositif des adresses publiques attribuées au premier dispositif selon les deux protocoles de transport.

Ainsi l'invention vise également un procédé de mise en correspondance d'adresses de transport publiques, ce procédé étant destiné à être mis en œuvre par un dispositif, dit second dispositif, et comprenant :
- une étape de réception d'un premier message transporté conformément à un premier protocole de transport, ledit premier message ayant comme adresse de transport source une première adresse de transport dite publique qui a été allouée à un premier dispositif par une entité de traduction d'adresses de transport placée en coupure de flux entre ledit premier et ledit second dispositif ;
- une étape de mémorisation de la première adresse de transport publique en association avec le premier protocole de transport et une information dite de correspondance ;
- une étape d'envoi au premier dispositif d'une réponse au premier message ;
- une étape de réception d'un second message transporté conformément à un second protocole de transport, ledit second message ayant comme adresse de transport source une seconde adresse de transport publique qui a été allouée au premier dispositif par l'entité de traduction d'adresses de transport, ce second message comprenant ladite information de correspondance ; et
- une étape de mise en correspondance de la première adresse de transport publique avec la seconde adresse de transport publique en utilisant l'information de correspondance.

Corrélativement, l'invention concerne un second dispositif, comprenant :
- un module de réception, configuré pour recevoir un premier message transporté conformément à un premier protocole de transport, ledit premier message ayant comme adresse de transport source une première adresse de transport dite publique qui a été allouée à un premier dispositif par une entité de traduction d'adresses de transport placée en coupure de flux entre ledit premier et ledit second dispositif ;
- un module de mémorisation, configuré pour mémoriser la première adresse de transport publique en association avec le premier protocole de transport et une information dite de correspondance ;
- un module d'envoi, configuré pour envoyer au premier dispositif une réponse au premier message ;
- un module de réception, configuré pour recevoir un second message transporté conformément à un second protocole de transport, ledit second message ayant comme adresse de transport source une seconde adresse de transport dite publique qui a été allouée au premier dispositif par l'entité de traduction d'adresses de transport, ce second message comprenant ladite information de correspondance ; et
- un module de mise en correspondance, configuré pour mettre en correspondance la première adresse de transport publique avec la seconde adresse de transport publique en utilisant l'information de correspondance.

Le procédé de mise en correspondance et le second dispositif bénéficient des mêmes avantages décrits précédemment pour le procédé de maintien et le premier dispositif.

Dans un mode particulier de réalisation, le premier message est une requête d'enregistrement du premier dispositif auprès du second dispositif et/ou le second message est un message de rafraîchissement d'une association d'adresses auprès de l'entité de traduction d'adresses.

Ainsi, par exemple, lorsque le second protocole est le protocole UDP, le second message est une requête SBR (STUN Binding Request) vide (i.e. sans contenu de message ou avec un message minimum non intrusif, c'est-à-dire insignifiant) conforme au protocole STUN (Simple Traversai of UDP through NATs), apte à rafraîchir l'association d'adresses créée au niveau de l'entité NAT pour le premier dispositif pour le second protocole.

Selon un autre exemple, lorsque le second protocole est le protocole TCP, le second message est un message de rafraîchissement d'une association d'adresses pour le protocole TCP, conforme au mécanisme décrit dans le document RFC 6223 intitulé « Indication of Support for keep-alive », avril 2011, et qui comprend deux séquences de retour chariot et de saut de ligne ou CLRF (Carriage Return and Line Feed).

Ainsi, dans ce mode particulier de réalisation, l'invention tire profit de formats de messages déjà existants au niveau des protocoles de transport classiques, et ne nécessite donc pas l'introduction de nouveaux formats de messages, d'une part, pour déclencher les associations d'adresses selon les deux protocoles auprès de l'entité NAT, et d'autre part pour véhiculer l'information de correspondance qui permet au second dispositif de relier l'adresse de transport publique sur le premier protocole avec l'adresse de transport publique sur le second protocole.

Cette information de mise en correspondance peut être générée soit par le premier dispositif soit par le second dispositif. Il s'agit préférentiellement d'un identifiant unique pour le second dispositif dans l'espace et dans le temps pour au moins la durée d'enregistrement du premier dispositif auprès du réseau, afin que le second dispositif puisse mettre en correspondance de manière univoque la première adresse publique avec la seconde adresse publique. Cette information de correspondance est par exemple une chaîne de caractères aléatoire ou un identifiant UUID (pour Universal Unique Identifier).

Ainsi, dans un mode particulier de réalisation, l'information de correspondance est générée par le second dispositif (par exemple sur réception du premier message) et insérée par celui-ci dans la réponse au premier message.

La présence de l'information de correspondance dans la réponse au premier message et dans le second message permet de mettre aisément en correspondance la première adresse de transport source publique du premier message et la seconde adresse de transport source publique du second message.

Dans l'exemple du second protocole UDP et du second message s'appuyant sur une requête SBR vide, l'information de correspondance peut être notamment une chaîne de caractères numériques générée par le second dispositif puis insérée par le premier dispositif dans un champ « Transaction-Id » d'un entête de la requête SBR.

Dans l'exemple du second protocole TCP, on peut envisager que le second message contienne une réponse factice conforme à un protocole de contrôle de sessions, cette réponse factice comprenant l'information de correspondance. Le protocole de contrôle de sessions considéré est préférentiellement le protocole SIP.

Par ce biais, on introduit dans les messages de rafraîchissement déjà prévus par les protocoles UDP et TCP des informations applicatives qui permettent au second dispositif la mise en correspondance des adresses publiques allouées par l'entité NAT au premier dispositif pour ces deux protocoles.

Dans un autre mode de réalisation, l'information de correspondance comprend la première adresse de transport publique allouée au premier dispositif, cette première adresse de transport publique ayant été insérée dans la réponse au premier message par le second dispositif.

Autrement dit, dans ce mode de réalisation, on utilise une information déjà retournée classiquement par le second dispositif dans son message de réponse selon le protocole SIP dès lors que le second dispositif a détecté la présence d'une entité NAT en coupure de flux des messages qu'il échange avec le premier dispositif. Une telle détection peut être mise en œuvre aisément, de façon connue en soi, en analysant les différentes adresses de transport spécifiées dans l'entête du premier message arrivant au second dispositif.

Dans ce mode de réalisation, lorsque le second protocole est le protocole UDP, l'information de correspondance peut ensuite être insérée par le premier dispositif dans un champ de la requête SBR de rafraîchissement ayant un format identique à un champ MAPPED-ADDRESS ou XOR-MAPPED-ADDRESS défini par le protocole STUN.

Un tel champ est déjà utilisé classiquement dans le protocole STUN pour véhiculer ce type d'information dans le sens réseau vers terminal. L'invention propose dans ce mode de réalisation d'utiliser un champ similaire pour véhiculer ce même type d'information dans le sens terminal vers réseau.

En réutilisant des informations existantes et/ou des formats de messages déjà prévus par les protocoles de transport, la mise en œuvre de l'invention est grandement simplifiée.

Dans un autre mode de réalisation, l'information de correspondance peut être générée par le premier dispositif et être insérée par le premier dispositif dans le premier message pour être transmise au second dispositif.

Il peut s'agir par exemple d'une information déjà transmise dans les messages du premier dispositif indépendamment de l'invention, comme par exemple un identifiant de transaction ou de session.

Dans l'exemple du protocole UDP et de la requête SBR vide utilisée pour le second message, une telle information de correspondance peut ensuite être aisément insérée par le premier dispositif dans un attribut REALM, NONCE ou SOFTWARE de la requête SBR.

Dans un mode particulier de réalisation, les différentes étapes du procédé de maintien et/ou du procédé de mise en correspondance sont déterminées par des instructions de programmes d'ordinateurs.

En conséquence, l'invention vise aussi un programme d'ordinateur sur un support d'informations, ce programme étant susceptible d'être mis en œuvre dans un premier dispositif ou plus généralement dans un ordinateur, ce programme comportant des instructions adaptées à la mise en œuvre des étapes d'un procédé de maintien tel que décrit ci-dessus.

L'invention vise également un programme d'ordinateur sur un support d'informations, ce programme étant susceptible d'être mis en œuvre dans un second dispositif ou plus généralement dans un ordinateur, ce programme comportant des instructions adaptées à la mise en œuvre des étapes d'un procédé de mise en correspondance tel que décrit ci-dessus.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise également un système de communication comprenant :
- un premier dispositif selon l'invention ;
- un second dispositif selon l'invention ; et
- une entité de traduction d'adresses de transport placée en coupure de flux entre le premier dispositif et le second dispositif.

Par ailleurs, selon un mode de réalisation particulier :
- le premier protocole et le second protocole sont des protocoles distincts qui peuvent être choisis parmi les protocoles TCP, UDP et SCTP notamment ; et/ou
- le premier dispositif est un terminal et le second dispositif est un point d'entrée d'un cœur de réseau auprès duquel le premier dispositif doit s'enregistrer pour accéder au cœur de réseau.

On peut également envisager, dans d'autres modes de réalisation, que le procédé de maintien, le procédé de mise en correspondance, le premier et le second dispositif et le système de communication selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un système de communication conforme à l'invention dans un mode particulier de réalisation ;
- les figures 2 et 3 représentent respectivement l'architecture matérielle d'un premier dispositif et d'un second dispositif conformes à l'invention, dans un mode particulier de réalisation ;
- les figures 4 à 6 illustrent les principales étapes des procédés de maintien et de mise en correspondance selon l'invention dans différents modes de réalisation dans lesquels ils sont mis en œuvre par le système de communication de la figure 1.

### Description détaillée de l'invention

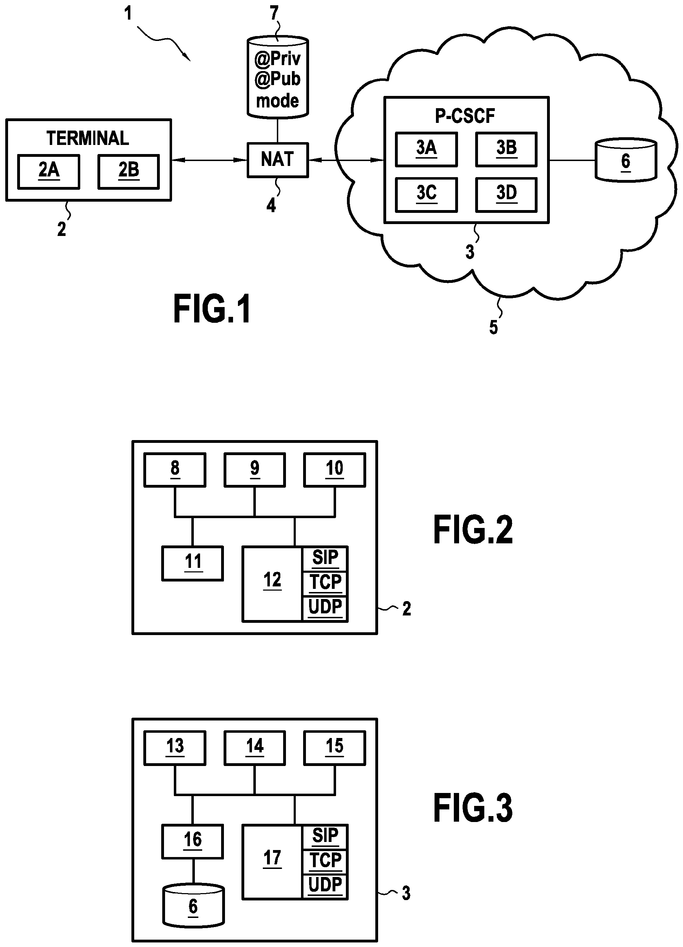

La **figure 1** représente, dans son environnement, un système de communication 1 conforme à l'invention.

Ce système de communication 1 comprend :
- un premier dispositif 2, conforme à l'invention ;
- un second dispositif 3, conforme à l'invention ; et
- une entité NAT 4, placée en coupure de flux entre le premier dispositif 2 et le second dispositif 3.

Dans l'exemple envisagé à la figure 1, le premier dispositif 2 est un terminal mobile (ex. un téléphone intelligent ou « smartphone », une tablette numérique, un ordinateur portable, etc.), hébergeant une pluralité d'applications, telles que par exemple des applications RCS, VoLTE, etc., s'appuyant sur les fonctionnalités offertes par un cœur de réseau IP 5.

Ce cœur de réseau IP 5 implémente ici une architecture IMS mettant en œuvre le protocole d'initiation de session SIP. Une telle architecture est connue de l'homme du métier et décrite par exemple dans les documents 3GPP TS 23.228 et TS 24.229. Toutefois cette hypothèse n'est pas limitative en soi, et d'autres architectures peuvent être envisagées, comme par exemple une architecture propriétaire, etc.

Le second dispositif 3 est un serveur P-CSCF du cœur de réseau IP 5 tel que décrit dans les documents 3GPP TS 23.228 et TS 24.229 précités et non décrit plus en détail ici, excepté les caractéristiques mises en œuvre par ce serveur conformément à l'invention.

Il est connu que pour pouvoir fonctionner sur le cœur de réseau IP 5, les différentes applications hébergées par le terminal 2 doivent s'enregistrer au préalable auprès de celui-ci. Cet enregistrement est géré par le serveur P-CSCF 3, et mis en œuvre par le terminal 2 en envoyant une requête SIP REGISTER au serveur P-CSCF 3 contenant notamment les caractéristiques multimédia (ou « feature tags ») supportées par ces applications. Les contextes d'enregistrement des terminaux au cœur de réseau 5 sont stockés par le serveur P-CSCF 3 dans une base de données 6.

L'entité NAT 4, placée en coupure de flux entre le terminal 2 et le serveur P-CSCF 3, est ici une entité NAPT (pour Network Address and Port Translation), apte à associer à une adresse de transport dite privée (ou interne) du terminal 2, une adresse de transport dite publique (ou externe) pour un mode de transport donné, tel que par exemple TCP, UDP ou SCTP. Une telle adresse de transport consiste ici en la combinaison d'une adresse IP et d'un port. Il convient de noter toutefois que l'invention s'applique également à une adresse de transport identifiée seulement par une adresse réseau ou IP.

L'association (adresse IP publique, port public, adresse IP privée, port privé, mode de transport) créée pour le terminal 2 est stockée dans une base de données 7 maintenue par l'entité NAT 4. La création d'une telle association permet d'ouvrir une porte (ou « pinhole ») au niveau de l'entité NAT 4 ; autrement dit, toutes les requêtes provenant du cœur de réseau 5 et transportées en utilisant l'adresse de transport publique comme destination et un mode de transport enregistrés par l'entité NAT 4 pour le terminal 2 sont acheminées par cette dernière jusqu'au terminal 2 en utilisant l'adresse de transport privée associée. Inversement, l'entité NAT 4 procède à la traduction de l'adresse de transport source privée d'un message provenant du terminal 2 en l'adresse de transport source publique associée dans la base de données 7.

Dans le mode de réalisation décrit ici, on suppose que dès lors qu'un message est émis par un terminal (et *a fortiori* le terminal 2) à destination du cœur de réseau 5, avec une adresse de transport source et selon un protocole de transport, ce message est apte à déclencher l'ouverture d'une porte au niveau de l'entité NAT 4 (autrement dit, il est autorisé à accéder au réseau) si une association d'adresses IP de transport n'existe pas déjà pour ce terminal dans la base de données 7 pour cette adresse de transport source et ce protocole de transport.

Dans le mode de réalisation décrit ici, le terminal 2 a l'architecture matérielle d'un ordinateur, telle qu'illustrée schématiquement à la **figure 2****.**

Le terminal 2 comprend notamment un processeur 8, une mémoire morte 9, une mémoire vive 10, une mémoire non volatile 11 dans laquelle sont stockées les applications hébergées par le terminal 2, et un module de communication 12.

Le module de communication 12 permet notamment au terminal 2 de communiquer avec le cœur de réseau 5 et en particulier avec le serveur P-CSCF 3. Ce module de communication 12 comprend à cet effet une pile de protocoles incluant notamment le protocole de contrôle de sessions SIP et les protocoles de transport UDP et TCP, ainsi que d'autres protocoles classiquement utilisés pour communiquer sur un réseau.

Il convient de noter que l'invention ne se limite pas aux protocoles précités et d'autres protocoles pourraient être envisagés, comme par exemple le protocole SCTP.

La mémoire morte 9 du terminal 2 constitue un support d'enregistrement conforme à l'invention, lisible par le processeur 8 et sur lequel est enregistré un programme d'ordinateur conforme à l'invention comportant des instructions pour l'exécution des étapes d'un procédé de maintien selon l'invention, dont les étapes sont décrites ultérieurement plus en détail.

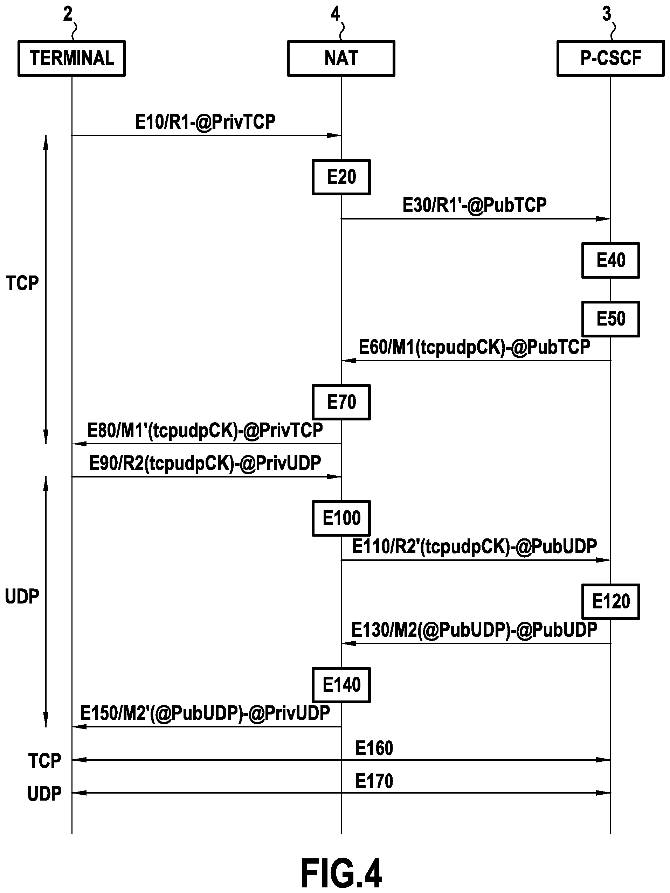

Ce programme d'ordinateur définit de façon équivalente des modules fonctionnels (et logiciels ici) du terminal 2 et notamment un premier module 2A d'envoi et de réception de messages selon un premier protocole de transport (par exemple ici TCP) et un second module 2B d'envoi et de réception de messages selon un second protocole de transport (par exemple ici UDP). Les fonctions mises en œuvre par ces modules sont décrites plus en détail ultérieurement en référence aux figures 4 à 6.

De façon similaire, dans le mode de réalisation décrit ici, le serveur P-CSCF 3 a l'architecture matérielle d'un ordinateur, telle qu'illustrée schématiquement à la **figure 3****.**

Il comprend notamment un processeur 13, une mémoire morte 14, une mémoire vive 15, une mémoire non volatile 16 dans laquelle est stockée la base de contextes 6, et un module de communication 17.

Le module de communication 17 permet notamment au serveur P-CSCF 3 de communiquer avec d'autres entités du cœur de réseau 5 (non représentées sur la figure 1) et avec des terminaux gérés par ce cœur de réseau comme par exemple le terminal 2. Ce module de communication 17 comprend à cet effet une pile de protocoles incluant notamment le protocole d'initiation de session SIP et les protocoles de transport UDP et TCP, ainsi que d'autres protocoles classiquement utilisés pour communiquer sur un réseau.

Il convient de noter que l'invention ne se limite pas bien entendu aux protocoles précités et d'autres protocoles pourraient être envisagés, comme par exemple le protocole SCTP.

La mémoire morte 14 du serveur P-CSCF 3 constitue un support d'enregistrement conforme à l'invention, lisible par le processeur 13 et sur lequel est enregistré un programme d'ordinateur conforme à l'invention comportant des instructions pour l'exécution des étapes d'un procédé de mise en correspondance selon l'invention, dont les étapes sont décrites ultérieurement plus en détail.

Ce programme d'ordinateur définit de façon équivalente des modules fonctionnels (et logiciels ici) du serveur P-CSCF 3 et notamment un module 3A d'envoi et de réception de messages du terminal 2 selon un premier protocole de transport (TCP ici), un module 3B de mémorisation des adresses de transport publiques utilisées par le terminal 2 dans le contexte du terminal stocké dans la base de données 6, un module 3C d'envoi et de réception de messages du terminal 2 selon un second protocole de transport (UDP ici), et un module 3D de mise en correspondance des adresses publiques. Les fonctions mises en œuvre par ces modules sont décrites plus en détail maintenant en référence aux figures 4 à 6.

Nous allons maintenant décrire, en références aux figures 4 à 6, différents modes de réalisation de l'invention, et notamment des étapes des procédés de maintien et de mise en correspondance selon l'invention, lorsque celle-ci est appliquée dans deux cas de figure distincts :
- 1^{er} cas de figure : le terminal 2 s'enregistre auprès du serveur P-CSCF 3 en utilisant un mode de transport (ex. TCP) différent de celui sur lequel il souhaite être contacté (ex. UDP), par exemple pour les motifs évoqués précédemment, à savoir le terminal 2 est configuré par défaut pour utiliser le protocole UDP en émission et en réception, mais du fait, par exemple, de la pluralité d'applications souhaitant s'enregistrer auprès du cœur de réseau 5, la requête d'enregistrement émise par le terminal 2 dépasse la taille maximale autorisée pour utiliser ce protocole et le terminal 2 doit basculer sur un mode de transport TCP. Il existe donc une différence dans ce premier cas de figure entre le mode de transport spécifié dans la requête pour contacter le terminal 2 et le mode de transport sur lequel est reçue cette requête par le serveur P-CSCF 3 ;
- 2^{ème} cas de figure : le terminal 2 s'enregistre selon un mode de transport (ex. UDP) cohérent avec celui sur lequel il souhaite être contacté.

La **figure 4** illustre les principales étapes d'un procédé de maintien et d'un procédé de mise en correspondance telles qu'elles sont mises en œuvre respectivement par le terminal 2 et par le serveur 3 selon un premier mode de réalisation appliqué au premier cas de figure précité.

On suppose dans l'exemple envisagé à la figure 4 que le terminal 2 envoie, par l'intermédiaire de son module 2A, une requête R1 d'enregistrement SIP REGISTER au serveur P-CSCF 3 (étape E10) contenant, dans son entête, les champs Via et Contact suivants :
Via : SIP/2.O/TCP IPadr_priv:port_privTCP ; branch=z9hG4bKZ8WlyYt8la ; keep Contact : userpart@IPadr_priv:port_privUDP ; transport=udp
où :
   - IPadr_priv désigne l'adresse IP privée du terminal 2 (utilisée pour les deux protocoles UDP et TCP) ;
   - port_privTCP désigne le port privé du terminal 2 pour le protocole TCP ; et
   - port_privUDP désigne le port privé du terminal 2 pour le protocole UDP.

L'adresse IP privée IPadr_priv et le port privé port_privTCP constituent ici l'adresse privée @PrivTCP de transport du terminal 2 pour le protocole de transport TCP. De façon similaire, l'adresse IP privée IPadr_priv et le port privé port_privUDP constituent l'adresse privée @PrivUDP de transport du terminal 2 pour le protocole de transport UDP.

Autrement dit, la requête R1 est envoyée conformément au protocole TCP avec comme adresse de transport source l'adresse de transport privée @PrivTCP (comme mentionné dans le champ Via de l'entête), bien que le terminal 2 souhaite être contacté en utilisant une adresse de transport selon le protocole UDP (comme mentionné dans le champ Contact de l'entête).

La requête R1 est interceptée par l'entité NAT 4 placée en coupure de flux du terminal 2 et de l'entité P-CSCF 3 (étape E20), et déclenche l'ouverture sur l'entité NAT 4 d'une porte pour le terminal 2 pour le protocole TCP.

Plus précisément, sur réception de la requête R1, l'entité NAT 4 crée de façon connue en soi, dans sa base de données 7, une association (ou « binding ») entre l'adresse de transport privée @PrivTCP source de la requête R1 et une adresse de transport publique @PubTCP allouée dynamiquement au terminal 2 pour le protocole TCP. Cette adresse de transport publique @PubTCP est constituée d'une adresse IP publique IPadr_pubTCP et d'un port public port_pubTCP. Autrement dit, l'entité NAT 4 stocke dans sa base de données 7 un quintuplet pour le terminal 2 comprenant :
- l'adresse IP privée IPadr_priv du terminal 2 ;
- le port privé port_privTCP du terminal 2 pour TCP ;
- l'adresse IP publique IPadr_pubTCP allouée au terminal 2 pour TCP ;
- le port public port_pubTCP alloué au terminal 2 pour TCP ; et
- un identifiant du mode de transport utilisé à savoir ici du protocole TCP.

Puis l'entité NAT 4 transfère la requête R1 au serveur P-CSCF 3 de façon connue en soi, sous la forme d'une requête R1' émise en utilisant l'adresse de transport @PubTCP (étape E30).

Cette requête R1' est reçue par le serveur P-CSCF 3 par l'intermédiaire de son module 3A avec comme adresse de transport source @PubTCP.

Le serveur P-CSCF 3 crée un contexte dans sa base de données 6 pour le terminal 2 dans lequel il mémorise, via son module 3B, en plus des autres données classiquement mémorisées par un serveur P-CSCF lors de l'enregistrement d'un terminal, l'adresse de transport publique @PubTCP allouée par l'entité NAT 4 au terminal 2 (incluant l'adresse IP publique et le port public), le mode de transport utilisé (TCP ici) et l'adresse de contact précisée par le terminal dans le champ Contact (étape E40).

Puis il détecte, en analysant le champ Via de l'entête de la requête et en comparant l'adresse IP de transport (@PrivTCP) mentionnée dans ce champ avec l'adresse de transport source (@PubTCP) de la requête R1', qu'une entité NAT est présente entre le terminal 2 et lui (étape E40).

Suite à cette détection, dans le premier mode de réalisation décrit ici, le serveur P-CSCF génère une information dite de correspondance TCP/UDP et désignée par tcpudpCK dans la suite de la description (étape E50). Cette information de correspondance est ici une chaîne de caractères numériques d'une taille prédéterminée (ex. 96 bits), générée aléatoirement par le serveur P-CSCF 3, et unique dans l'espace et dans le temps (au moins pour le temps d'enregistrement du terminal 2) pour le serveur P-CSCF 3. Dans la terminologie SIP, une telle chaîne de caractères numériques ou alphanumériques est également appelée « cookie ». Il s'agit par exemple d'un identifiant universel unique ou UUID. Dans l'exemple envisagé ici, cette information de correspondance est égale à la valeur 345345345387.

Cette information de correspondance est mémorisée par le serveur P-CSCF 3 dans le contexte du terminal 2 en association avec l'adresse de transport @PubTCP.

Puis le serveur P-CSCF 3 envoie une réponse SIP 200 OK à la requête d'enregistrement du terminal 2, sur le protocole TCP en utilisant l'adresse de transport publique @PubTCP, par l'intermédiaire de son module 3A. Il insère préalablement dans cette réponse, désignée ici par M1, l'information de correspondance TCP/UDP tcpudpCK dans un paramètre tcpudpCK du champ Via prévu à cet effet (étape E60). L'entête de cette réponse M1 comprend ainsi notamment les entêtes Via et Contact suivants :
Via : SIP/2.O/TCP IPadr_privTCP:port_privTCP ; branch=z9hG4bKZ8WIyYt8la ; keep=60 ;
**tcpudpCK=345345345387 ; keeptcp=600 ; keepudp=60 ; rport= port_pubTCP; received= IPadr_pubTCP**
Contact : userpart@IPadr_privUDP:port_privUDP ; transport=udp ; **expires=3600**

Les éléments ajoutés par le serveur P-CSCF 3 sont représentés en caractères gras ci-dessus pour faciliter leur identification. En particulier, dans le premier mode de réalisation décrit ici, le serveur P-CSCF 3 a inséré dans l'entête Via de la réponse M1 l'information de correspondance tcpudpCK=345345345387, mais également des valeurs de durées de rafraîchissement keeptcp et keepudp des associations NAT auprès de l'entité NAT 4 pour les deux protocoles TCP et UDP respectivement. Le serveur P-CSCF 3 ayant détecté la présence de l'entité NAT 4 a également indiqué au terminal 2 dans sa réponse, conformément au protocole SIP, l'adresse de transport publique @PubTCP, dans les attributs rport et received. Enfin, la durée de l'enregistrement expires est donnée dans le champ Contact.

La réponse M1 est interceptée par l'entité NAT 4, qui traduit l'adresse de transport publique @PubTCP en l'adresse de transport privée @PrivTCP conformément à l'association stockée dans sa base de données 7 (étape E70), avant de transférer la réponse M1' en résultant vers le terminal 2 (étape E80).

Sur réception de la réponse M1' via son module 2A, le terminal 2 stocke en mémoire l'information de correspondance tcpudpCK, et est en mesure de déterminer qu'une entité NAT est présente entre le serveur P-CSCF 3 et lui, ainsi que l'adresse de transport publique qui lui est attribuée (allouée) par cette entité pour le port TCP.

Puis il envoie une nouvelle requête R2 au serveur P-CSCF 3 conforme cette fois-ci au protocole UDP, cette requête R2 ayant comme adresse de transport source l'adresse de transport privée UDP @PrivUDP du terminal 2 (étape E90).

Dans le premier mode de réalisation décrit ici, cette requête R2 est une requête SBR (STUN Binding Request) de rafraîchissement d'une association d'adresses UDP créée auprès d'une entité NAT, conforme au protocole STUN. Le protocole STUN est un protocole connu décrit notamment dans le document RFC 5389 édité en octobre 2008 par l'IETF.

Plus précisément cette requête R2 est une requête SBR vide (i.e. sans contenu de message ou avec un contenu minimum insignifiant non intrusif), dans laquelle le terminal 2 par l'intermédiaire de son module 2B, insère l'information de correspondance tcpudpCK qu'il a reçue du serveur P-CSCF 3 dans le message de réponse M1'.

L'information de correspondance tcpudpCK est insérée ici dans un attribut Transaction ID de la requête SBR, la taille et la nature (entier codé sur 96 bits) de cet attribut étant compatible avec la taille de l'information de correspondance. Il convient de noter qu'un tel attribut est classique pour ce type de requête, de sorte que l'invention, dans ce mode de réalisation, ne requiert l'introduction d'aucun nouvel attribut, et reste compatible avec les mécanismes décrits dans le document RFC5626 intitulé « Managing Client-Initiated Connections in the Session Initiation Protocol », édité par l'IETF.

En variante, un nouvel attribut peut être créé pour véhiculer dans la requête SBR l'information de correspondance. Dans une autre variante encore, un autre type de requête peut être utilisée pour la requête R2.

Autrement dit, conformément au premier mode de réalisation de l'invention, le terminal 2 par le biais de son module 2B insère une information applicative dans la requête de rafraîchissement SBR, à savoir l'information de correspondance tcpudpCK.

Cette requête R2 est interceptée par l'entité NAT 4 placée en coupure de flux entre le terminal 2 et le serveur P-CSCF 3, et déclenche l'ouverture sur l'entité NAT 4 d'une porte pour le terminal 2 pour le protocole UDP cette fois-ci (étape E100).

Plus précisément, sur réception de la requête R2, l'entité NAT 4 crée de façon connue en soi, dans sa base de données 7, une association (ou « binding ») entre l'adresse de transport source privée @PrivUDP de la requête R2, et une adresse de transport publique @PubUDP allouée dynamiquement au terminal 2 pour le protocole UDP. Cette adresse de transport publique @PubUDP est constituée d'une adresse IP publique IPadr_pubUDP et d'un port public port_pubUDP. Autrement dit, l'entité NAT 4 stocke dans sa base de données 7 un nouveau quintuplet pour le terminal 2 comprenant :
- l'adresse IP privée IPadr_priv du terminal 2;
- le port privé port_privUDP du terminal 2 pour UDP ;
- l'adresse IP publique IPadr_pubUDP allouée au terminal 2 pour UDP ;
- le port public port_pubUDP alloué au terminal 2 pour UDP ; et
- un identifiant du mode de transport utilisé à savoir ici du protocole UDP.

Ainsi, la requête R2 a pour effet de créer et de maintenir auprès de l'entité NAT 4 une association d'adresses pour le terminal 2 pour le protocole UDP qui vient compléter l'association d'adresses créée en réponse à la requête R1 pour le protocole TCP. Autrement dit, suite à la réception des requêtes R1 et R2, on dispose simultanément au niveau de l'entité NAT 4 de deux associations d'adresses pour le terminal 2 respectivement sur le protocole TCP et sur le protocole UDP.

Puis l'entité NAT 4 transfère la requête R2 au serveur P-CSCF 3 de façon connue en soi, sous la forme d'une requête R2' ayant comme adresse de transport source l'adresse de transport publique @PubUDP (étape E110).

Cette requête R2' est reçue par le serveur P-CSCF 3 par l'intermédiaire de son module 3C.

Le serveur P-CSCF 3, via son module 3D, extrait de la requête R2' l'information de correspondance tcpudpCK. Puis il utilise cette information de correspondance pour mettre en correspondance l'adresse de transport source publique @PubUDP de la requête R2' et l'adresse de transport source publique @PubTCP de la requête R1' (étape E120). Il stocke alors l'adresse de transport @PubUDP dans le contexte du terminal 2 stocké dans la base de données 6 en association avec l'adresse de transport publique @PubTCP.

Ainsi, cette mise en correspondance déclenchée par la présence de l'information de correspondance tcpudpCK dans la requête R2' permet au serveur P-CSCF 3 non seulement de déterminer à quel terminal 2 est associée l'adresse de transport publique @PubUDP de la requête R2', mais également de faire le lien avec l'association d'adresses TCP dont il disposait déjà pour ce terminal dans la base de données 6. Il en résulte dès lors que le serveur P-CSCF 3 est apte à transmettre sans difficulté les messages destinés au terminal 2 arrivant du cœur de réseau 5 ou ses propres messages.

Il envoie, via son module 3C, une réponse SBResp au terminal 2 sur l'adresse de transport publique @PubUDP contenant, dans un attribut MAPPED-ADDRESS ou XOR-MAPPED, l'adresse de transport publique @PubUDP de la requête R2' (étape E130). Cette réponse est notée M2.

La réponse M2 est interceptée par l'entité NAT 4, qui traduit l'adresse de transport publique @PubUDP en l'adresse de transport privée @PrivUDP conformément à l'association stockée dans sa base de données 7 (étape E140), avant de transférer la réponse M2' en résultant vers le terminal 2 (étape E150).

Sur réception de la réponse M2' via son module 2B, le terminal 2 peut déterminer quelle adresse de transport publique lui est allouée par l'entité NAT 4 pour le protocole UDP.

Puis le terminal 2, via respectivement ses modules 2A et 2B, envoie périodiquement (selon les périodes spécifiées par le serveur P-CSCF 3 dans la réponse M1) des requêtes de rafraîchissement au serveur P-CSCF 3 des associations d'adresses qui lui ont été allouées pour les protocoles TCP et UDP (étapes E160 et E170 respectivement).

Pour le protocole TCP, une telle requête comprend de façon connue, conformément au mécanisme de rafraîchissement (ou « keep alive ») décrit dans le document RFC 6223 cité précédemment, une séquence de deux retours chariot et sauts de ligne CRLF, tandis que pour le protocole UDP, elle est constituée, comme mentionné précédemment, d'une requête SBR vide ou au contenu insignifiant.

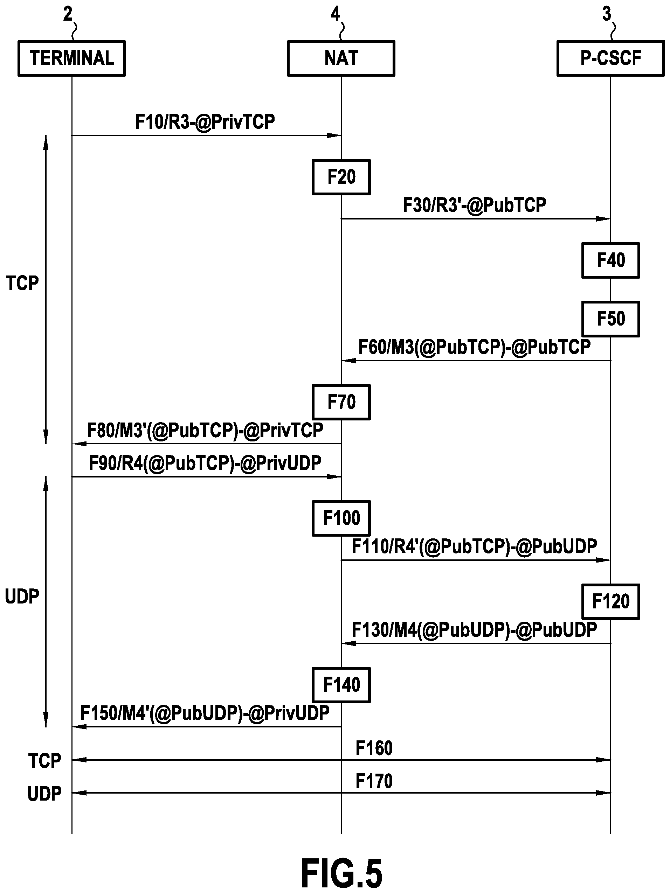

La **figure 5** illustre les principales étapes d'un procédé de configuration et d'un procédé de mise en correspondance telles qu'elles sont mises en œuvre respectivement par le terminal 2 et par le serveur 3 selon un deuxième mode de réalisation appliqué au premier cas de figure envisagé précédemment (i.e. différence entre le protocole de transport sur lequel le serveur 3 reçoit la requête d'enregistrement du terminal 2 et le protocole de transport sur lequel le terminal indique dans cette requête vouloir être contacté).

On suppose dans l'exemple envisagé à la figure 5 que le terminal 2 envoie, par l'intermédiaire de son module 2A, une requête R3 d'enregistrement SIP REGISTER au serveur P-CSCF 3 (étape F10) contenant, dans son entête, les champs Via et Contact suivants :
Via : SIP/2.O/TCP IPadr_priv:port_privTCP ; branch=z9hG4bKZ8WlyYt8la ; keep Contact : userpart@IPadr_priv:port_privUDP ; transport=udp

- IPadr_priv désigne l'adresse IP privée du terminal 2 (utilisée pour les deux protocoles UDP et TCP) ;
- port_privTCP désigne le port privé du terminal 2 pour le protocole TCP ; et
- port_privUDP désigne le port privé du terminal 2 pour le protocole UDP.

L'adresse IP privée IPadr_priv et le port privé port_privTCP constituent ici l'adresse privée @PrivTCP de transport du terminal 2 pour le protocole de transport TCP. De façon similaire, l'adresse IP privée IPadr_priv et le port privé port_privUDP constituent l'adresse privée @PrivUDP de transport du terminal 2 pour le protocole de transport UDP.

Autrement dit, comme dans le premier mode de réalisation décrit en référence à la figure 4, la requête R3 est envoyée conformément au protocole TCP avec comme adresse de transport source, l'adresse de transport privée @PrivTCP (comme mentionné dans le champ Via de l'entête), bien que le terminal 2 souhaite être contacté sur une adresse de transport selon le protocole UDP (comme mentionné dans le champ Contact de l'entête).

La requête R3 est interceptée par l'entité NAT 4 placée en coupure de flux du terminal 2 et de l'entité P-CSCF 3 (étape F20), et déclenche l'ouverture sur l'entité NAT 4 d'une porte pour le terminal 2 pour le protocole TCP. L'entité NAT 4 transfère la requête R3 au serveur P-CSCF 3 sous la forme d'une requête R3' avec comme adresse de transport source, l'adresse de transport @PubTCP résultant de l'ouverture de la porte (étape F30). Les étapes F20 et F30 étant identiques respectivement aux étapes E20 et E30 décrites pour le premier mode de réalisation, elles ne sont pas détaillées davantage ici.

La requête R3' est reçue par le serveur P-CSCF 3 par l'intermédiaire de son module 3A, qui crée un contexte dans sa base de données 6 pour le terminal 2 dans lequel il mémorise l'adresse de transport publique @PubTCP allouée au terminal 2 (incluant l'adresse IP publique IPadr_pubTCP et le port public port_pubTCP), le mode de transport utilisé (TCP ici) et l'adresse de contact précisée par le terminal dans le champ Contact (étape F40). Il détecte par ailleurs, comme dans le premier mode de réalisation, qu'une entité NAT est présente entre le terminal 2 et lui, ainsi que la différence entre le protocole de transport TCP utilisé par le terminal 2 pour émettre la requête R1 et le protocole de transport UDP mentionné dans cette requête pour contacter le terminal 2. L'étape F40 est identique à l'étape E40 décrite précédemment.

Suite à cette détection, dans le second mode de réalisation décrit ici, le serveur P-CSCF 3 envoie une réponse SIP 200 OK (désignée par M3) à la requête d'enregistrement du terminal 2, sur le protocole TCP en utilisant l'adresse de transport publique @PubTCP, par l'intermédiaire de son module 3A. L'entête de cette réponse M3 comprend notamment les entêtes Via et Contact suivants :
Via : SIP/2.O/TCP IPadr_privTCP:port_privTCP ; branch=z9hG4bKZ8WIyYt8la ; keep=60 ;
**keeptcp=600 ; keepudp=60 ; rport= port_pubTCP; received= IPadr_pubTCP**
Contact : userpart@IPadr_privUDP:port_privUDP ; transport=udp ; **expires=3600**

Les éléments ajoutés par le serveur P-CSCF 3 sont représentés en caractères gras ci-dessus pour faciliter leur identification. En particulier, dans le second mode de réalisation décrit ici, le serveur P-CSCF 3 a inséré dans l'entête Via de la réponse M3 des valeurs de durées de rafraîchissement keeptcp et keepudp des associations NAT auprès de l'entité NAT 4 pour les deux protocoles TCP et UDP respectivement.

Le serveur P-CSCF 3 ayant en outre détecté la présence de l'entité NAT 4 a également indiqué au terminal 2 dans sa réponse l'adresse de transport source de la requête R3', dans les attributs rport et received. Dans le second mode de réalisation décrit ici, c'est l'information contenue dans ces attributs rport et received qui est utilisée comme une information de correspondance au sens de l'invention. La mémorisation de cette information de correspondance dans le contexte du terminal 2 est donc implicite, s'agissant de l'adresse de transport publique du terminal 2 déjà mémorisée par le serveur P-CSCF 3 lors de l'étape F40.

Enfin, la durée de l'enregistrement expires est donnée dans le champ Contact.

La réponse M3 est interceptée par l'entité NAT 4, qui traduit l'adresse de transport publique @PubTCP en l'adresse de transport privée @PrivTCP conformément à l'association stockée dans sa base de données 7 (étape F70), avant de transférer la réponse M3' en résultant vers le terminal 2 (étape F80).

Sur réception de la réponse M3' via son module 2A, le terminal 2 est en mesure de déterminer qu'une entité NAT est présente entre le serveur P-CSCF 3 et lui, ainsi que l'adresse de transport publique qui lui est allouée par cette entité pour le port TCP.

Puis, il envoie une nouvelle requête R4 au serveur P-CSCF 3 conforme cette fois-ci au protocole UDP, cette requête R4 ayant comme adresse de transport source l'adresse de transport privée UDP @PrivUDP du terminal 2 (étape F90).

Cette requête R4 est, comme pour la requête R2 dans le premier mode de réalisation, une requête SBR de rafraîchissement d'une association d'adresses UDP conforme au protocole STUN. Autrement dit, il s'agit d'une requête SBR vide (i.e. sans contenu de message ou avec un contenu minimum insignifiant).

Conformément à l'invention, le terminal 2 par l'intermédiaire de son module 2B, insère dans cette requête l'information de correspondance qu'il a reçue du serveur P-CSCF 3 dans le message de réponse M3'. Il s'agit dans le second mode de réalisation décrit ici, de l'adresse de transport publique TCP @PubTCP contenue dans les attributs rport et received du champ Via du message M3'.

A cet effet, un attribut ayant un format identique au format des attributs MAPPED-ADDRESS ou XOR-MAPPED-ADDRESS déjà définis par le protocole STUN, appelé par exemple NAT-MAPPED-ADDRESS, est utilisé pour véhiculer cette adresse dans la requête R4. Les attributs MAPPED-ADDRESS ou XOR-MAPPED-ADDRESS sont, selon le protocole STUN, utilisés dans le sens réseau vers terminal en réponse aux requêtes SBR, et décrits dans le document RFC 5389.

En variante, un autre format d'attribut peut être défini pour véhiculer l'information de correspondance constituée par l'adresse de transport publique TCP @PubTCP.

La requête R4 est interceptée par l'entité NAT 4 placée en coupure de flux entre le terminal 2 et le serveur P-CSCF 3, et déclenche l'ouverture sur l'entité NAT 4 d'une porte pour le terminal 2 pour le protocole UDP cette fois-ci (étape F100). L'étape F100 se déroule de façon identique à l'étape E100 précédemment décrite.

Plus précisément, sur réception de la requête R4, l'entité NAT 4 crée de façon connue en soi, dans sa base de données 7, une association (ou « binding ») entre l'adresse de transport source privée @PrivUDP de la requête R4 et une adresse de transport publique @PubUDP allouée dynamiquement au terminal 2 pour le protocole UDP. Cette adresse de transport publique @PubUDP est constituée d'une adresse IP publique IPadr_pubUDP et d'un port public port_pubUDP. Autrement dit, l'entité NAT 4 stocke dans sa base de données 7 un nouveau quintuplet pour le terminal 2 comprenant :
- l'adresse IP privée IPadr_priv du terminal 2 ;
- le port privé port_privUDP du terminal 2 pour UDP ;
- l'adresse IP publique IPadr_pubUDP allouée au terminal 2 pour UDP ;
- le port public port_pubUDP alloué au terminal 2 pour UDP ; et
- un identifiant du mode de transport utilisé à savoir ici du protocole UDP.

Ainsi, la requête R4 a pour effet de créer et de maintenir auprès de l'entité NAT 4 une association d'adresses pour le terminal 2 pour le protocole UDP qui vient compléter l'association d'adresses créée en réponse à la requête R3 pour le protocole TCP. Autrement dit, suite à la réception des requêtes R3 et R4, on dispose simultanément au niveau de l'entité NAT 4 de deux associations d'adresses pour le terminal 2 respectivement sur le protocole TCP et sur le protocole UDP.

Puis l'entité NAT 4 transfère la requête R4 au serveur P-CSCF 3 de façon connue en soi, sous la forme d'une requête R4' ayant comme adresse de transport source l'adresse de transport publique @PubUDP (étape F110).

Cette requête R4' est reçue par le serveur P-CSCF 3 par l'intermédiaire de son module 3C.

Le serveur P-CSCF 3, via son module 3D, extrait de la requête R4' l'information de correspondance constituée par l'adresse de transport publique @PubTCP. Puis il utilise cette information de correspondance stockée dans la base de données 6 pour mettre en correspondance (i.e. pour associer) l'adresse de transport source @PubUDP de la requête R4' et l'adresse de transport source @PubTCP de la requête R3' (étape F120). Il stocke alors l'adresse de transport @PubUDP dans le contexte du terminal 2 stocké dans la base de données 6 en association avec l'adresse de transport publique @PubTCP.

Ainsi, cette mise en correspondance déclenchée par la présence de l'information de correspondance @PubTCP dans la requête R4' permet au serveur P-CSCF 3 non seulement de déterminer à quel terminal 2 est associée l'adresse de transport publique @PubUDP de la requête R4', mais également de faire le lien avec l'association d'adresses TCP dont il disposait déjà pour ce terminal dans la base de données 6. Il en résulte dès lors que le serveur P-CSCF 3 est apte à transmettre sans encombre les messages destinés au terminal 2 arrivant du cœur de réseau 5 ou ses propres messages selon l'un quelconque des protocoles UDP et TCP.

L'étape F120 est suivie d'une étape F130 d'envoi par le serveur P-CSCF3 d'une réponse M4 SBResp au terminal 2 sur l'adresse de transport publique @PubUDP contenant, dans un attribut MAPPED-ADDRESS ou XOR-MAPPED, l'adresse de transport publique @PubUDP, d'une étape F140 d'interception de cette réponse par l'entité NAT 4 et une étape F150 de transfert de la réponse M4' correspondant à la réponse M4 en utilisant l'adresse de transport @PrivUDP, et d'étapes F160 et F170 de rafraîchissement, identiques respectivement aux étapes E130, E140, E150, E160 et E170 décrites précédemment pour le premier mode de réalisation.

Dans le premier et le second mode de réalisation, l'information de correspondance utilisée est une information insérée par le serveur P-CSCF 3 dans sa réponse à la requête d'enregistrement du terminal 2. Cette information de correspondance est soit une information générée à cet effet par le serveur P-CSCF 3, soit une information extraite de la requête d'enregistrement par celui-ci, à savoir, par exemple, l'adresse de transport publique @PubTCP sur laquelle la requête d'enregistrement lui a été envoyée (autrement dit l'adresse de transport source de la requête d'enregistrement vue par le serveur P-CSCF 3).

En variante, l'information de correspondance peut être générée par le terminal 2. Il peut s'agir par exemple d'un identifiant de session ou de transaction généré classiquement par le terminal 2 et que celui-ci insère conformément au protocole SIP dans sa requête d'enregistrement, dans le paramètre branch du champ Via de l'entête. Cette information est en effet un identifiant permettant la mise en correspondance de manière univoque de l'adresse de transport publique du terminal 2 sur le protocole TCP et de l'adresse de transport publique du terminal 2 sur le protocole UDP. Selon cette variante, le serveur P-CSCF extrait l'identifiant de transaction ou de session contenu dans le paramètre branch de la requête d'enregistrement, le mémorise dans le contexte du terminal 2 avec l'adresse de transport @PubTCP, puis le renvoie dans le message de réponse à la requête d'enregistrement. L'identifiant de transaction ou de session est ensuite envoyé par le terminal 2 dans la requête de rafraîchissement SBR, par exemple dans un attribut REALM, NONCE ou SOFTWARE défini par le protocole STUN ou dans un attribut dédié. Sur réception de la requête SBR, le serveur P-CSCF 3 utilise l'identifiant de transaction ou de session pour faire la liaison entre les adresses @PubUDP et @PubTCP.

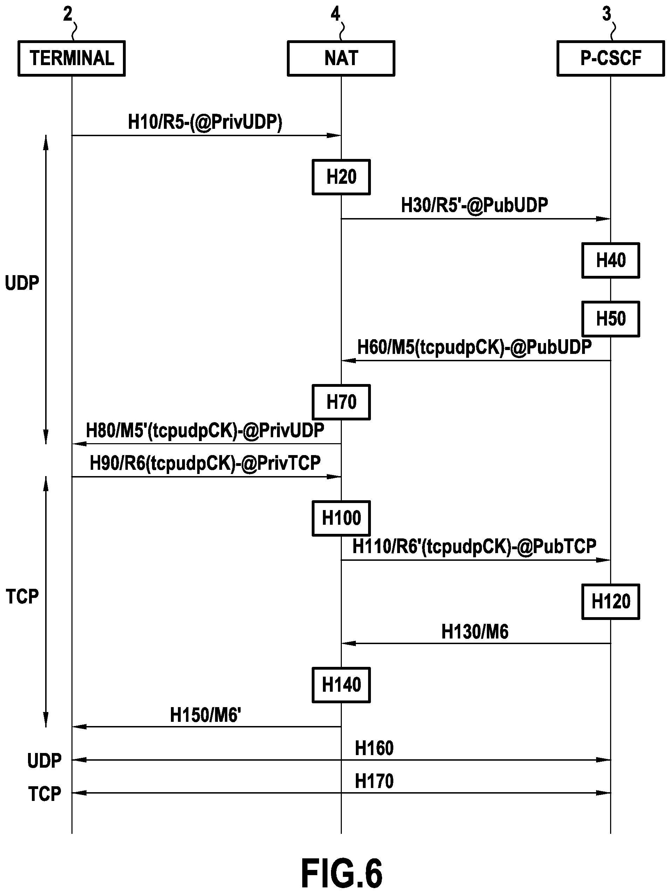

La **figure 6** illustre maintenant les principales étapes d'un procédé de configuration et d'un procédé de mise en correspondance telles qu'elles sont mises en œuvre respectivement par le terminal 2 et par le serveur 3 selon un troisième mode de réalisation appliqué au second cas de figure précité.

On suppose dans l'exemple envisagé à la figure 6 que le terminal 2 envoie, par l'intermédiaire de son module 2B, une requête R5 d'enregistrement SIP REGISTER au serveur P-CSCF 3 (étape H10) contenant, dans son entête, les champs Via et Contact suivants :
Via : SIP/2.O/TCP IPadr_priv:port_privUDP ; branch=z9hG4bKZ8WlyYt8la ; keep
Contact : userpart@IPadr_priv:port_privUDP ; transport=udp
où IPadr_priv et port_privUDP désignent respectivement l'adresse IP privée et le port privé UDP constituant l'adresse privée @PrivUDP de transport du terminal 2 pour le protocole de transport UDP.

Autrement dit dans ce troisième mode de réalisation, la requête R5 est envoyée conformément au protocole UDP avec comme adresse de transport source l'adresse de transport privée @PrivUDP du terminal 2 (comme mentionné dans le champ Via de l'entête), et le terminal 2 souhaite être contacté sur une adresse de transport selon le protocole UDP (comme mentionné dans le champ Contact de l'entête). Il y a donc cohérence entre les informations véhiculées par la requête d'enregistrement R5 et le protocole de transport sur lequel est acheminée cette requête jusqu'au serveur 3.

La requête R5 est interceptée par l'entité NAT 4 placée en coupure de flux du terminal 2 et de l'entité P-CSCF 3 (étape H20), et déclenche l'ouverture sur l'entité NAT 4 d'une porte pour le terminal 2 pour le protocole UDP.

Plus précisément, sur réception de la requête R5, l'entité NAT 4 crée de façon connue en soi, dans sa base de données 7, une association (ou « binding ») entre l'adresse de transport source privée @PrivUDP de la requête R5 et une adresse de transport publique @PubUDP allouée dynamiquement au terminal 2 pour le protocole UDP. Cette adresse de transport publique @PubUDP est constituée d'une adresse IP publique IPadr_pubUDP et d'un port public port_pubUDP. Autrement dit, l'entité NAT 4 stocke dans sa base de données 7 un quintuplet pour le terminal 2 comprenant :
- l'adresse IP privée IPadr_priv du terminal 2 ;
- le port privé port_privUDP du terminal 2 pour UDP ;
- l'adresse IP publique IPadr_pubUDP allouée au terminal 2 pour UDP ;
- le port public port_pubUDP alloué au terminal 2 pour UDP ; et
- un identifiant du mode de transport utilisé à savoir ici du protocole UDP.

Puis l'entité NAT 4 transfère la requête R5 au serveur P-CSCF 3 de façon connue en soi, sous la forme d'une requête R5' émise en utilisant l'adresse de transport @PubUDP comme adresse source (étape H30).

Cette requête R5' est reçue par le serveur P-CSCF 3 par l'intermédiaire de son module 3C.

Le serveur P-CSCF 3 crée un contexte dans sa base de données 6 pour le terminal 2 dans lequel il mémorise, via son module 3B, en plus des autres données classiquement mémorisées par un serveur P-CSCF lors de l'enregistrement d'un terminal, l'adresse de transport publique @PubUDP allouée au terminal 2 (incluant l'adresse IP publique et le port public), le mode de transport utilisé (UDP ici) et l'adresse de contact précisée par le terminal dans le champ Contact (étape H50).

Puis il détecte, en analysant le champ Via de l'entête de la requête et en comparant l'adresse de transport (@PrivUDP) mentionnée dans ce champ avec l'adresse de transport source (@PubUDP) de la requête R5', qu'une entité NAT est présente entre le terminal 2 et lui (étape H40).

Suite à cette détection, dans le troisième mode de réalisation décrit ici, le serveur P-CSCF génère une information de correspondance TCP/UDP désignée ici par tcpudpCK (étape H50). Cette information de correspondance est ici, comme dans le premier mode de réalisation, une chaîne de caractères numériques d'une taille prédéterminée (ex. 96 bits), générée aléatoirement par le serveur P-CSCF 3, et unique dans l'espace et le temps pour le serveur P-CSCF 3. Sa valeur est égale par exemple ici à 345345345387.

Cette information de correspondance est mémorisée par le serveur P-CSCF 3 dans le contexte du terminal 2 en association avec l'adresse de transport @PubUDP.

Puis le serveur P-CSCF 3 envoie une réponse SIP 200 OK à la requête d'enregistrement du terminal 2, sur le protocole UDP en utilisant l'adresse de transport publique @PubUDP, par l'intermédiaire de son module 3C. Il insère préalablement dans cette réponse, désignée ici par M5, l'information de correspondance tcpudpCK dans un paramètre du champ Via prévu à cet effet (étape H60). L'entête de cette réponse M5 comprend ainsi notamment les entêtes Via et Contact suivants :
Via : SIP/2.O/TCP IPadr_privUDP:port_privUDP ; branch=z9hG4bKZ8WlyYt8la ; keep ;
**tcpudpCK=345345345387 ; keeptcp=600** ; **keepudp=60 ; rport= port_pubUDP; received= IPadr_pubUDP**
Contact : userpart@IPadr_privUDP:port_privUDP ; transport=udp ; **expires=3600**

Les éléments ajoutés par le serveur P-CSCF 3 sont représentés en caractères gras ci-dessus pour faciliter leur identification.

La réponse M5 est interceptée par l'entité NAT 4, qui traduit l'adresse de transport publique @PubUDP en l'adresse de transport privée @PrivUDP conformément à l'association stockée dans sa base de données 7 (étape H70), avant de transférer la réponse M5' en résultant vers le terminal 2 (étape H80).

Sur réception de la réponse M5' via son module 2B, le terminal 2 stocke en mémoire l'information de correspondance tcpudpCK, et est en mesure de déterminer qu'une entité NAT est présente entre le serveur P-CSCF 3 et lui, ainsi que l'adresse de transport publique qui lui est attribuée par cette entité pour le protocole UDP.

Puis il envoie, par le biais de son module 2A, une nouvelle requête R6 au serveur P-CSCF 3 conforme cette fois-ci au protocole TCP ayant comme adresse de transport source l'adresse de transport privée TCP @PrivTCP du terminal 2 (étape H90).

Dans le troisième mode de réalisation décrit ici, cette requête R6 est une requête de rafraîchissement d'une association d'adresses TCP créée auprès d'une entité NAT, telle que décrite dans le document RFC 6223.

Cette requête R6 est ainsi constituée comme décrit dans le document RFC 6223, de deux séquences CRLF, qui sont suivies conformément à l'invention d'une réponse SIP factice (par exemple une réponse SIP 499) contenant l'information de correspondance tcpudpCK, par exemple dans un paramètre « Binding-link » de la réponse. La réponse SIP est ensuite suivie d'une nouvelle séquence CRLF.

Il convient de noter que la réponse SIP insérée dans la requête R6 est factice en ce qu'elle ne répond à aucune requête à proprement parler. Il s'agit par ce biais de signaler au serveur P-CSCF 3 auquel est destiné ce message qu'il véhicule une information de correspondance qu'il doit utiliser conformément à l'invention. Autrement dit, conformément au troisième mode de réalisation de l'invention, le terminal 2, par le biais de son module 2A, insère une information applicative dans la requête de rafraîchissement TCP, à savoir l'information de correspondance tcpudpCK.

Cette requête R6 est interceptée par l'entité NAT 4 placée en coupure de flux entre le terminal 2 et le serveur P-CSCF 3, et déclenche l'ouverture sur l'entité NAT 4 d'une porte pour le terminal 2 pour le protocole TCP cette fois-ci (étape H100). Cette étape est identique aux étapes E70 et F70 décrites précédemment en référence au premier et au deuxième mode de réalisation.

Plus précisément, sur réception de la requête R6, l'entité NAT 4 crée de façon connue en soi, dans sa base de données 7, une association (ou « binding ») entre l'adresse de transport source privée @PrivTCP de la requête R6 et une adresse de transport publique @PubTCP allouée dynamiquement au terminal 2 pour le protocole TCP. Cette adresse de transport publique @PubTCP est constituée d'une adresse IP publique IPadr_pubTCP et d'un port public port_pubTCP. Autrement dit, l'entité NAT 4 stocke dans sa base de données 7 un nouveau quintuplet pour le terminal 2 comprenant :
- l'adresse IP privée IPadr_priv du terminal 2 ;
- le port privé port_privTCP du terminal 2 pour TCP ;
- l'adresse IP publique IPadr_pubTCP allouée au terminal 2 pour TCP ;
- le port public port_pubTCP alloué au terminal 2 pour TCP ; et
- un identifiant du mode de transport utilisé à savoir ici du protocole TCP.

Ainsi, la requête R6 a pour effet de créer et de maintenir auprès de l'entité NAT 4 une association d'adresses pour le terminal 2 pour le protocole TCP qui vient compléter l'association d'adresses créée en réponse à la requête R5 pour le protocole UDP. Autrement dit, suite à la réception des requêtes R5 et R6, on dispose simultanément au niveau de l'entité NAT 4 de deux associations d'adresses pour le terminal 2 respectivement sur le protocole TCP et sur le protocole UDP.

Puis l'entité NAT 4 transfère la requête R6 au serveur P-CSCF 3 de façon connue en soi, sous la forme d'une requête R6' ayant comme adresse de transport source l'adresse de transport publique @PubTCP (étape H110).

Cette requête R6' est reçue par le serveur P-CSCF 3 par l'intermédiaire de son module 3A.

Le serveur P-CSCF 3, via son module 3D, identifie dans la requête R6' la présence de la réponse factice SIP 499 OK et extrait de celle-ci, l'information de correspondance tcpudpCK. Puis il utilise cette information de correspondance pour mettre en correspondance l'adresse de transport source @PubTCP de la requête R6' et l'adresse de transport source @PubUDP de la requête R5' (étape H120). Il stocke alors l'adresse de transport @PubTCP dans le contexte du terminal 2 stocké dans la base de données 6 en association avec l'adresse de transport @PubUDP.

Ainsi, cette mise en correspondance déclenchée par la présence de l'information de correspondance tcpudpCK dans la requête R6' permet au serveur P-CSCF 3 non seulement de déterminer à quel terminal 2 est associée l'adresse de transport publique @PubTCP de la requête R6', mais également de faire le lien avec l'association d'adresses UDP dont il disposait déjà pour ce terminal dans la base de données 6. Il en résulte dès lors que le serveur P-CSCF 3 est apte à transmettre sans encombre les messages destinés au terminal 2 arrivant du cœur de réseau 5 (ou ses propres messages) sur le protocole TCP. Il peut notamment gérer et transférer vers le terminal 2 les requêtes ayant une taille supérieure à la taille MTU définie pour le protocole UDP, comme une porte TCP est ouverte sur l'entité NAT 4 et peut être utilisée.

Il envoie, via son module 3A, au terminal 2, une réponse M6 à la requête de rafraîchissement TCP keep alive sur l'adresse de transport publique @PubTCP (étape H130).

La réponse M6 est interceptée par l'entité NAT 4, qui traduit l'adresse de transport publique @PubTCP en l'adresse de transport privée @PrivTCP conformément à l'association stockée dans sa base de données 7 (étape H140), avant de transférer la réponse M6' en résultant vers le terminal 2 (étape H150).

Puis le terminal 2, via respectivement ses modules 2B et 2A, envoie périodiquement (selon les périodes spécifiées par le serveur P-CSCF 3 dans la réponse M5) des requêtes de rafraîchissement au serveur P-CSCF 3 des associations d'adresses qui lui ont été allouées pour les protocoles UDP et TCP (étapes H160 et E170 respectivement).

Il convient de noter que le troisième mode de réalisation a été décrit selon une variante similaire à celle implémentée dans le premier mode de réalisation (génération de l'information de correspondance par le serveur P-CSCF 3). Toutefois, ce troisième mode de réalisation peut être envisagé également en combinaison avec les variantes décrites dans le deuxième mode de réalisation.

## Revendications

1. Procédé de maintien d'associations d'adresses de transport auprès d'une entité de traduction d'adresses de transport (4) placée en coupure de flux entre un premier dispositif (2) et un second dispositif (3), le procédé de maintien étant destiné à être mis en oeuvre par le premier dispositif (2) et comprenant :
- une étape d'envoi (E10,F10,H10), conformément à un premier protocole de transport, d'un premier message (R1,R3,R5) ayant une première adresse de transport dite privée à destination du second dispositif, ce premier message étant apte à déclencher une première association par l'entité de traduction d'adresses de transport d'une première adresse de transport dite publique à la première adresse de transport privée et au premier protocole de transport ;
- sur réception d'une réponse (M1',M3',M5') au premier message provenant du second dispositif, une étape d'envoi (E90,F90,H90), conformément à un second protocole de transport, d'un second message ayant une seconde adresse de transport privée à destination du second dispositif, ce second message étant apte à déclencher une seconde association par l'entité de traduction d'adresses de transport (4) de ladite seconde adresse de transport privée à une seconde adresse de transport dite publique et au second protocole de transport, le second message contenant en outre une information dite de correspondance, comprise également dans le premier message et/ou dans la réponse au premier message, et apte à déclencher, suite à la réception du second message par le second dispositif, la mise en correspondance par le second dispositif de la seconde adresse de transport publique avec la première adresse de transport publique.

2. Procédé de maintien selon la revendication 1 comprenant en outre une étape d'envoi (E160,E170,F160,F170,H160,H170) d'un message de rafraîchissement de la première association d'adresses et/ou d'un message de rafraîchissement de la seconde association d'adresses auprès de l'entité de traduction d'adresses.

3. Procédé de mise en correspondance d'adresses de transport publiques, ledit procédé étant destiné à être mis en oeuvre par un dispositif (3), dit second dispositif, et comprenant :
- une étape de réception (E30,F30,H30) d'un premier message transporté conformément à un premier protocole de transport, ledit premier message ayant comme adresse de transport source une première adresse de transport dite publique qui a été allouée à un premier dispositif (2) par une entité de traduction d'adresses de transport (4) placée en coupure de flux entre ledit premier et ledit second dispositif ;
- une étape de mémorisation (E40,F40,H40) de la première adresse de transport publique en association avec le premier protocole de transport et une information dite de correspondance ;
- une étape d'envoi (E60,F60,G60) au premier dispositif d'une réponse au premier message ;
- une étape de réception (E110,F110,G110) d'un second message transporté conformément à un second protocole de transport, ledit second message ayant comme adresse de transport source une seconde adresse de transport publique qui a été allouée au premier dispositif par l'entité de traduction d'adresses de transport (4), ce second message comprenant ladite information de correspondance ; et
- une étape de mise en correspondance (E120,F120,G120) de la première adresse de transport publique avec la seconde adresse de transport publique en utilisant l'information de correspondance.

4. Procédé selon l'une quelconque des revendications 1 à 3 dans lequel :
- le premier message est une requête d'enregistrement du premier dispositif auprès du second dispositif ; et/ou
- le second message est un message de rafraîchissement d'une association d'adresses auprès de l'entité de traduction d'adresses.

5. Procédé selon l'une quelconque des revendications 1 à 4 dans lequel l'information de correspondance est générée et insérée par le second dispositif dans la réponse au premier message.

6. Procédé selon la revendication 5 dans lequel :
- le second protocole est un protocole UDP, User Datagram Protocol ;
- le second message est une requête vide SBR, STUN Binding Request, conforme au protocole STUN, Simple Traversai of UDP through NATs ; et
- l'information de correspondance est une chaîne de caractères numériques générée par le second dispositif puis insérée par le premier dispositif dans un champ « Transaction-Id » d'un entête de la requête SBR.

7. Procédé selon l'une quelconque des revendications 1 à 5 :
- le second protocole est un protocole TCP, Transmission Control Protocol ;
- le second message est un message de rafraîchissement d'une association d'adresses pour le protocole TCP et contenant une réponse factice conforme à un protocole de contrôle de sessions, ladite réponse factice comprenant l'information de correspondance.

8. Procédé selon l'une quelconque des revendications 1 à 4 dans lequel l'information de correspondance comprend la première adresse de transport publique, cette première adresse de transport publique ayant été insérée dans la réponse au premier message par le second dispositif.

9. Procédé selon la revendication 8 dans lequel :
- le second protocole est un protocole UDP ;
- le second message est une requête SBR vide conforme au protocole STUN ; et
- l'information de correspondance est insérée par le premier dispositif dans un champ de la requête SBR ayant un format identique à un champ MAPPED-ADDRESS ou XOR-MAPPED-ADDRESS défini par le protocole STUN.

10. Procédé selon l'une quelconque des revendications 1 à 4 dans lequel l'information de correspondance est générée et insérée par le premier dispositif dans le premier message.

11. Procédé selon la revendication 10 dans lequel l'information de correspondance est un identifiant de transaction.

12. Procédé selon la revendication 11 dans lequel :
- le second protocole est un protocole UDP ;
- le second message est une requête SBR vide conforme au protocole STUN ; et
- l'information de correspondance est insérée par le premier dispositif dans un attribut REALM, NONCE ou SOFTWARE de la requête SBR.

13. Procédé selon l'une quelconque des revendications 1 à 12 dans lequel la réponse au premier message comprend en outre une période de rafraîchissement de la première et /ou de la seconde association d'adresses.

14. Procédé selon l'une quelconque des revendications 1 à 13 dans lequel le premier protocole et le second protocole sont des protocoles distincts choisis parmi les protocoles TCP, UDP et SCTP.

15. Programme d'ordinateur comportant des instructions pour l'exécution des étapes d'un procédé selon l'une quelconque des revendications 1 à 14 lorsque ledit programme est exécuté par un ordinateur.

16. Support d'enregistrement lisible par un ordinateur sur lequel est enregistré un programme d'ordinateur comprenant des instructions pour l'exécution des étapes d'un procédé selon l'une quelconque des revendications 1 à 14.

17. Dispositif (2), dit premier dispositif, comprenant :
- un premier module (3A,3B) d'envoi configuré pour envoyer conformément à un premier protocole de transport, un premier message ayant une première adresse de transport dite privée à destination d'un second dispositif, ce premier message étant apte à déclencher une première association, par une entité de traduction d'adresses de transport placée en coupure de flux entre ledit premier dispositif et ledit second dispositif, d'une première adresse de transport dite publique à la première adresse de transport privée et au premier protocole de transport ;
- un second module (3B,3A) d'envoi, activé sur réception d'une réponse au premier message provenant du second dispositif, et configuré pour envoyer conformément à un second protocole de transport, un second message ayant une seconde adresse de transport privée à destination du second dispositif, ce second message étant apte à déclencher une seconde association par l'entité de traduction d'adresses de transport (4) de ladite seconde adresse de transport privée à une seconde adresse de transport dite publique et au second protocole de transport, le second message contenant en outre une information dite de correspondance, comprise également dans le premier message et/ou dans la réponse au premier message, et apte à déclencher, suite à la réception du second message par le second dispositif, la mise en correspondance par le second dispositif de la seconde adresse de transport publique avec la première adresse de transport publique.

18. Dispositif (3), dit second dispositif, comprenant :
- un module de réception (3A,3C), configuré pour recevoir un premier message transporté conformément à un premier protocole de transport, ledit premier message ayant comme adresse de transport source une première adresse de transport dite publique qui a été allouée à un premier dispositif (2) par une entité de traduction d'adresses de transport (4) placée en coupure de flux entre ledit premier et ledit second dispositif ;
- un module de mémorisation (3B), configuré pour mémoriser la première adresse de transport publique en association avec le premier protocole de transport et une information dite de correspondance ;
- un module d'envoi (3A,3C), configuré pour envoyer au premier dispositif une réponse au premier message ;
- un module de réception (3C,3A), configuré pour recevoir un second message transporté conformément à un second protocole de transport, ledit second message ayant comme adresse de transport source une seconde adresse de transport dite publique qui a été allouée au premier dispositif par l'entité de traduction d'adresses de transport (4), ce second message comprenant ladite information de correspondance ; et
- un module de mise en correspondance (3D), configuré pour mettre en correspondance la première adresse de transport publique avec la seconde adresse de transport publique en utilisant l'information de correspondance.

19. Système de communication (1) comprenant :
- un premier dispositif (2) selon la revendication 17 ;
- un second dispositif (3) selon la revendication 18 ; et
- une entité de traduction d'adresses de transport (4) placée en coupure de flux entre le premier dispositif et le second dispositif.

## Patentansprüche

1. Verfahren zur Aufrechterhaltung von Transportadressenassoziationen bei einer Transportadressübersetzungseinheit (4), die in Unterbrechung des Flusses zwischen einer ersten Vorrichtung (2) und einer zweiten Vorrichtung (3) angeordnet ist, wobei das Verfahren zur Aufrechterhaltung dazu bestimmt ist, durch die erste Vorrichtung (2) umgesetzt zu werden und umfasst:
- einen Schritt des Sendens (E10, F10, H10) einer ersten Nachricht (R1, R3, R5) mit einer sogenannten privaten ersten Transportadresse an die zweite Vorrichtung entsprechend einem ersten Transportprotokoll, wobei diese erste Nachricht dazu geeignet ist, eine durch die Transportadressübersetzungseinheit erfolgende erste Assoziation einer sogenannten öffentlichen ersten Transportadresse mit der privaten ersten Transportadresse und mit dem ersten Transportprotokoll auszulösen;
- bei Empfang einer Antwort (M1', M3', M5') auf die von der zweiten Vorrichtung stammende erste Nachricht einen Schritt des Sendens (E90, F90, H90) einer zweiten Nachricht mit einer privaten zweiten Transportadresse an die zweite Vorrichtung entsprechend einem zweiten Transportprotokoll, wobei diese zweite Nachricht dazu geeignet ist, eine durch die Transportadressübersetzungseinheit (4) erfolgende zweite Assoziation der privaten zweiten Transportadresse mit einer sogenannten öffentlichen zweiten Transportadresse und dem zweiten Transportprotokoll auszulösen, wobei die zweite Nachricht außerdem eine sogenannte Zuordnungsinformation enthält, die ebenfalls in der ersten Nachricht und/oder in der Antwort auf die erste Nachricht umfasst ist, und dazu geeignet ist, nach Empfang der zweiten Nachricht durch die zweite Vorrichtung, die Zuordnung der öffentlichen zweiten Transportadresse zu der öffentlichen ersten Transportadresse durch die zweite Vorrichtung auszulösen.

2. Verfahren zur Aufrechterhaltung nach Anspruch 1, außerdem umfassend einen Schritt des Sendens (E160, E170, F160, F170, H160, H170) einer Nachricht zur Auffrischung der ersten Adressenassoziation und/oder eine Nachricht zur Auffrischung der zweiten Adressenassoziation bei der Adressübersetzungseinheit.

3. Verfahren zur Zuordnung von öffentlichen Transportadressen, wobei das Verfahren dazu bestimmt ist, durch eine Vorrichtung (3), zweite Vorrichtung genannt, umgesetzt zu werden, und umfasst:
- einen Schritt des Empfangens (E30, F30, H30) einer ersten Nachricht, die entsprechend einem ersten Transportprotokoll transportiert wurde, wobei die erste Nachricht als Quelltransportadresse eine sogenannte öffentliche erste Transportadresse hat, die einer ersten Vorrichtung (2) durch eine Transportadressübersetzungseinheit (4) zugewiesen wurde, die in Unterbrechung des Flusses zwischen der ersten Vorrichtung und der zweiten Vorrichtung angeordnet ist;
- einen Schritt des Speicherns (E40, F40, H40) der öffentlichen ersten Transportadresse in Assoziation mit dem ersten Transportprotokoll und einer sogenannten Zuordnungsinformation;
- einen Schritt des Sendens (E60, F60, G60) einer Antwort auf die erste Nachricht an die erste Vorrichtung;
- einen Schritt des Empfangens (E110, F110, G110) einer zweiten Nachricht, die entsprechend einem zweiten Transportprotokoll transportiert wurde, wobei die zweite Nachricht als Quelltransportadresse eine öffentliche zweite Transportadresse hat, die der ersten Vorrichtung durch die Transportadressübersetzungseinheit (4) zugewiesen wurde, wobei diese zweite Nachricht die Zuordnungsinformation umfasst; und
- einen Schritt des Zuordnens (E120, F120, G120) der öffentlichen ersten Transportadresse zu der öffentlichen zweiten Transportadresse mithilfe der Zuordnungsinformation.

4. Verfahren nach einem der Ansprüche 1 bis 3, wobei:
- die erste Nachricht eine Registrierungsanfrage der ersten Vorrichtung an die zweite Vorrichtung ist; und/oder
- die zweite Nachricht eine Nachricht zur Auffrischung einer Adressenassoziation bei der Adressübersetzungseinheit ist.

5. Verfahren nach einem der Ansprüche 1 bis 4, wobei die Zuordnungsinformation durch die zweite Vorrichtung erzeugt und in die Antwort auf die erste Nachricht eingefügt wird.

6. Verfahren nach Anspruch 5, wobei:
- das zweite Protokoll ein UDP-Protokoll, User Diagram Protocol, ist;
- die zweite Nachricht eine leere SBR-Anfrage, STUN Binding Request, ist, die dem Protokoll STUN, Simple Traversal of UDP through NATs, entspricht; und
- die Zuordnungsinformation eine Kette numerischer Zeichen ist, die von der zweiten Vorrichtung erzeugt und dann von der ersten Vorrichtung in ein Feld "Transaction-Id" eines Kopfs der SBR-Anfrage eingefügt wird.

7. Verfahren nach einem der Ansprüche 1 bis 5:
- das zweite Protokoll ist ein Protokoll TCP, Transmission Control Protocol;
- die zweite Nachricht ist eine Nachricht zur Auffrischung einer Adressenassoziation für das Protokoll TCP und enthält eine unechte Antwort entsprechend einem Sitzungssteuerungsprotokoll, wobei die unechte Antwort die Zuordnungsinformation enthält.

8. Verfahren nach einem der Ansprüche 1 bis 4, wobei die Zuordnungsinformation die öffentliche erste Transportadresse umfasst, wobei diese öffentliche erste Transportadresse von der zweiten Vorrichtung in die erste Nachricht eingefügt wurde.

9. Verfahren nach Anspruch 8, wobei:
- das zweite Protokoll ein Protokoll UDP ist;
- die zweite Nachricht eine leere SBR-Anfrage ist, die dem Protokoll STUN entspricht; und
- die Zuordnungsinformation von der zweiten Vorrichtung in ein Feld der SBR-Anfrage eingefügt wird, das ein Format hat, das mit einem durch das Protokoll STUN definierten Feld MAPPED-ADDRESS oder XOR-MAPPED-ADDRESS identisch ist.

10. Verfahren nach einem der Ansprüche 1 bis 4, wobei die Zuordnungsinformation von der ersten Vorrichtung erzeugt und in die erste Nachricht eingefügt wird.

11. Verfahren nach Anspruch 10, wobei die Zuordnungsinformation eine Transaktionskennung ist.

12. Verfahren nach Anspruch 11, wobei
- das zweite Protokoll ein Protokoll UDP ist;
- die zweite Nachricht eine leere SBR-Anfrage ist, die dem Protokoll STUN entspricht; und
- die Zuordnungsinformation von der ersten Vorrichtung in ein Attribut REALM, NONCE oder SOFTWARE der SBR-Anfrage eingefügt wird.

13. Verfahren nach einem der Ansprüche 1 bis 12, wobei die Antwort auf die erste Nachricht außerdem einen Zeitraum der Auffrischung der ersten und/oder der zweiten Adressenassoziation umfasst.

14. Verfahren nach einem der Ansprüche 1 bis 13, wobei das erste Protokoll und das zweite Protokoll unterschiedliche Protokolle sind, die unter den Protokollen TCP, UDP und SCTP ausgewählt sind.

15. Computerprogramm, umfassend Anweisungen zur Ausführung der Schritte eines Verfahrens nach einem der Ansprüche 1 bis 14, wenn das Programm von einem Computer ausgeführt wird.

16. Speichermedium, das durch einen Computer lesbar ist, auf dem ein Computerprogramm gespeichert ist, umfassend Anweisungen zur Ausführung der Schritte eines Verfahrens nach einem der Ansprüche 1 bis 14.

17. Vorrichtung (2), erste Vorrichtung genannt, umfassend:
- ein erstes Sendemodul (3A, 3B), das dazu konfiguriert ist, eine erste Nachricht mit einer sogenannten privaten ersten Transportadresse entsprechend einem ersten Transportprotokoll an eine zweite Vorrichtung zu senden, wobei diese erste Nachricht dazu geeignet ist, eine durch eine in Unterbrechung des Flusses zwischen der ersten Vorrichtung und der zweiten Vorrichtung angeordnete Transportadressübersetzungseinheit erfolgende erste Assoziation einer sogenannten öffentlichen ersten Transportadresse mit der privaten ersten Transportadresse und mit dem ersten Transportprotokoll auszulösen;
- ein zweites Sendemodul (3B, 3A), das bei Empfang einer Antwort auf die von der zweiten Vorrichtung stammende erste Nachricht aktiviert wird und dazu konfiguriert ist, eine zweite Nachricht mit einer privaten zweiten Transportadresse entsprechend einem zweiten Transportprotokoll an die zweite Vorrichtung zu senden, wobei diese zweite Nachricht dazu geeignet ist, eine durch die Transportadressübersetzungseinheit (4) erfolgende zweite Assoziation der privaten zweiten Transportadresse mit einer sogenannten öffentlichen zweiten Transportadresse und dem zweiten Transportprotokoll auszulösen, wobei die zweite Nachricht außerdem eine sogenannte Zuordnungsinformation enthält, die ebenfalls in der ersten Nachricht und/oder in der Antwort auf die erste Nachricht umfasst ist, und dazu geeignet ist, nach Empfang der zweiten Nachricht durch die zweite Vorrichtung, die Zuordnung der öffentlichen zweiten Transportadresse zu der öffentlichen ersten Transportadresse durch die zweite Vorrichtung auszulösen.

18. Vorrichtung (3), zweite Vorrichtung genannt, umfassend:
- ein Empfangsmodul (3A, 3C), das dazu konfiguriert ist, eine erste Nachricht zu empfangen, die entsprechend einem ersten Transportprotokoll transportiert wurde, wobei die erste Nachricht als Quelltransportadresse eine sogenannte öffentliche erste Transportadresse hat, die einer ersten Vorrichtung (2) durch eine Transportadressübersetzungseinheit (4) zugewiesen wurde, die in Unterbrechung des Flusses zwischen der ersten Vorrichtung und der zweiten Vorrichtung angeordnet ist;
- ein Speichermodul (3B), das dazu konfiguriert ist, die öffentliche erste Transportadresse in Assoziation mit dem ersten Transportprotokoll und einer sogenannten Zuordnungsinformation zu speichern;
- ein Sendemodul (3A, 3C), dazu konfiguriert ist, eine Antwort auf die erste Nachricht an die erste Vorrichtung zu senden;
- ein Empfangsmodul (3C, 3A), das dazu konfiguriert ist, eine zweite Nachricht, die entsprechend einem zweiten Transportprotokoll transportiert wurde, zu empfangen, wobei die zweite Nachricht als Quelltransportadresse eine sogenannte öffentliche zweite Transportadresse hat, die der ersten Vorrichtung durch die Transportadressübersetzungseinheit (4) zugewiesen wurde, wobei diese zweite Nachricht die Zuordnungsinformation umfasst, und
- ein Zuordnungsmodul (3D), das dazu konfiguriert ist, die öffentliche erste Transportadresse der öffentlichen zweiten Transportadresse mithilfe der Zuordnungsinformation zuzuordnen.

19. Kommunikationssystem (1), umfassend:
- eine erste Vorrichtung (2) nach Anspruch 17;
- eine zweite Vorrichtung (3) nach Anspruch 18; und
- eine Transportadressübersetzungseinheit (4), die in Unterbrechung des Flusses zwischen der ersten Vorrichtung und der zweiten Vorrichtung angeordnet ist.

## Claims

1. Method for maintaining transport address associations with a transport address translation entity (4) placed in cut-through configuration of the flow between a first device (2) and a second device (3), the maintaining method being intended to be implemented by the first device (2) and comprising:
- a step of sending (E10, F10, H10), in accordance with a first transport protocol, a first message (R1, R3, R5) having a first transport address, called first private transport address, to the second device, this first message being able to trigger a first association, by the transport address translation entity, of a first transport address, called first public transport address, with the first private transport address and with the first transport protocol;
- upon reception of a response (M1', M3', M5') to the first message from the second device, a step of sending (E90, F90, H90), in accordance with a second transport protocol, a second message having a second private transport address to the second device, this second message being able to trigger a second association, by the transport address translation entity (4), of said second private transport address with a second transport address, called second public transport address, and with the second transport protocol, the second message furthermore containing information, called correspondence information, also contained in the first message and/or in the response to the first message, and able to trigger, following the reception of the second message by the second device, the matching, by the second device, of the second public transport address with the first public transport address.

2. Maintaining method according to Claim 1, furthermore comprising a step of sending (E160, E170, F160, F170, H160, H170) a message to refresh the first address association and/or a message to refresh the second address association to the address translation entity.

3. Method for matching public transport addresses, said method being intended to be implemented by a device (3), called second device, and comprising:
- a step of receiving (E30, F30, H30) a first message transported in accordance with a first transport protocol, said first message having, as source transport address, a first transport address, called first public transport address, that has been allocated to a first device (2) by a transport address translation entity (4) placed in cut-through configuration of the flow between said first and said second device;
- a step of storing (E40, F40, H40) the first public transport address in association with the first transport protocol and information, called correspondence information;
- a step of sending (E60, F60, G60) a response to the first message to the first device;
- a step of receiving (E110, F110, G110) a second message transported in accordance with a second transport protocol, said second message having, as source transport address, a second public transport address that has been allocated to the first device by the transport address translation entity (4), this second message comprising said correspondence information; and
- a step of matching (E120, F120, G120) the first public transport address with the second public transport address using the correspondence information.

4. Method according to any one of Claims 1 to 3, wherein:
- the first message is a request to register the first device with the second device; and/or
- the second message is a message to refresh an address association in the address translation entity.

5. Method according to any one of Claims 1 to 4, wherein the correspondence information is generated and inserted into the response to the first message by the second device.

6. Method according to Claim 5, wherein:
- the second protocol is a UDP, User Datagram Protocol, protocol;
- the second message is a blank SBR, STUN Binding Request, request in accordance with the STUN, Simple Transversal of UDP through NATs, protocol; and
- the correspondence information is a string of numerical characters generated by the second device and then inserted by the first device into a "Transaction-Id" field of a header of the SBR request.

7. Method according to any one of Claims 1 to 5:
- the second protocol is a TCP, Transmission Control Protocol, protocol;
- the second message is a message to refresh an address association for the TCP protocol and containing a dummy response in accordance with a session monitoring protocol, said dummy response comprising the correspondence information.

8. Method according to any one of Claims 1 to 4, wherein the correspondence information comprises the first public transport address, this first public transport address having been inserted into the response to the first message by the second device.

9. Method according to Claim 8, wherein:
- the second protocol is a UDP protocol;
- the second message is a blank SBR request in accordance with the STUN protocol; and
- the correspondence information is inserted by the first device into a field of the SBR request having a format identical to a MAPPED-ADDRESS or XOR-MAPPED-ADDRESS field defined by the STUN protocol.

10. Method according to any one of Claims 1 to 4, wherein the correspondence information is generated and inserted into the first message by the first device.

11. Method according to Claim 10, wherein the correspondence information is a transaction identifier.

12. Method according to Claim 11, wherein:
- the second protocol is a UDP protocol;
- the second message is a blank SBR request in accordance with the STUN protocol; and
- the correspondence information is inserted into a REALM, NONCE or SOFTWARE attribute of the SBR request by the first device.

13. Method according to any one of Claims 1 to 12, wherein the response to the first message furthermore comprises a refresh period of the first and/or of the second address association.

14. Method according to any one of Claims 1 to 13, wherein the first protocol and the second protocol are separate protocols chosen from among the TCP, UDP and SCTP protocols.

15. Computer program comprising instructions for executing the steps of a method according to any one of Claims 1 to 14 when said program is executed by a computer.

16. Computer-readable recording medium on which there is recorded a computer program comprising instructions for executing the steps of a method according to any one of Claims 1 to 14.

17. Device (2), called first device, comprising:
- a first sending module (3A, 3B) configured so as to send, in accordance with a first transport protocol, a first message having a first transport address, called first private transport address, to a second device, this first message being able to trigger a first association, by a transport address translation entity placed in cut-through configuration of the flow between said first device and said second device, of a first transport address, called first public transport address, with the first private transport address and with the first transport protocol;
- a second sending module (3B, 3A), activated upon reception of a response to the first message from the second device, and configured so as to send, in accordance with a second transport protocol, a second message having a second private transport address to the second device, this second message being able to trigger a second association, by the transport address translation entity (4), of said second private transport address with a second transport address, called second public transport address, and with the second transport protocol, the second message furthermore containing information, called correspondence information, also contained in the first message and/or in the response to the first message, and able to trigger, following the reception of the second message by the second device, the matching, by the second device, of the second public transport address with the first public transport address.

18. Device (3), called second device, comprising:
- a reception module (3A, 3C), configured so as to receive a first message transported in accordance with a first transport protocol, said first message having, as source transport address, a first transport address, called first public transport address, that has been allocated to a first device (2) by a transport address translation entity (4) placed in cut-through configuration of the flow between said first and said second device;
- a storage module (3B), configured so as to store the first public transport address in association with the first transport protocol and information, called correspondence information;
- a sending module (3A, 3C), configured so as to send a response to the first message to the first device;
- a reception module (3C, 3A), configured so as to receive a second message transported in accordance with a second transport protocol, said second message having, as source transport address, a second transport address, called second public transport address, that has been allocated to the first device by the transport address translation entity (4), this second message comprising said correspondence information; and
- a matching module (3D), configured so as to match the first public transport address with the second public transport address using the correspondence information.

19. Communication system (1) comprising:
- a first device (2) according to Claim 17;
- a second device (3) according to Claim 18; and
- a transport address translation entity (4) placed in cut-through configuration of the flow between the first device and the second device.
